# EUROPEAN PATENT APPLICATION

(11) **EP 4 322 627 A1**
(43) Date of publication of application: **14.02.2024**
(21) Application number: 23157381.7
(22) Date of filing: 17.02.2023
(51) Int. Cl.: H04W 52/02, H04W 72/04, H04L 5/00, H04W 72/0453, H04W 72/0446, H04L 1/00, H04W 56/00, H04J 13/00

(54) **WAKE UP SIGNAL SUPPORTING RRM MEASUREMENT AND TRACKING**

(30) Priority: 12.08.2022 EP 22190235; 12.08.2022 EP 22190198
(71) Applicant: Panasonic Intellectual Property Corporation of America, Torrance, CA 90504 (US)
(72) Inventor: LI, Hongchao, 63225 Langen (DE); SUZUKI, Hidetoshi, Osaka, 571-8501 (JP)
(74) Representative: Grünecker Patent- und Rechtsanwälte PartG mbB

(57) **Abstract**

Provided are a communication device, a base station, and methods for a communication device and a base station. The communication device comprises a transceiver, which, in operation, receives wireless signals. The communication device further comprises a circuitry which, in operation, searches, in the wireless signal, for a supplementary synchronization signal, SS, in a resource different from occasions configured for a synchronization signal block, SSB, wherein the SSB comprises a primary SS, a secondary SS and a physical broadcast channel, PBCH.

## Description

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

One non-limiting and exemplary embodiment facilitates efficient low power operation of communication devices.

In an embodiment, the techniques disclosed herein feature a user equipment comprising a transceiver, which, in operation, receives wireless signals; and circuitry, which, in operation, (i) detects, in the received wireless signals, presence of a wake-up signal, WUS, (ii) based on the WUS, determines from the received wireless signals, wake-up information, and (iii) based on the wake-up information, determines to receive control information other than WUS and wake-up information.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing which shows functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6**: is a block diagram showing a base station and a communication device in a communication system for the embodiment with wake-up signal including one or more blank resource elements,
- **Fig. 7**: is a schematic drawing illustrating wake-up signal represented by a sequence of muted and unmuted resource elements in time domain,
- **Fig. 8**: is a schematic drawing illustrating wake-up signal represented by a sequence of muted and unmuted resource elements in frequency domain,
- **Fig. 9**: is a block diagram showing functional structure of the WUS detecting circuitry,
- **Fig. 10**: is a block diagram showing functional structure of the WUS generating circuitry,
- **Fig. 11**: is a flow chart showing steps of a communication method for a user equipment,
- **Fig. 12**: is a flow chart showing steps of a communication method for a network node (base station),
- **Fig. 13**: is a block diagram showing a base station and a communication device in a communication system for the embodiment regarding the two-part wake up signaling,
- **Fig. 14**: is a block diagram showing functional structure of the WUS/WUI detecting circuitry,
- **Fig. 15**: is a block diagram showing functional structure of the WUS/WUI generating circuitry,
- **Fig. 16**: is a schematic drawing illustrating an offset between the wake-up signal and wake-up information,
- **Fig. 17**: is a schematic drawing illustrating an offset between the wake-up signal and an SSB to be received,
- **Fig. 18**: is a schematic drawing illustrating an offset between the wake-up signal or wake-up information and an PDCCH monitoring occasion, to be received,
- **Fig. 19**: is a flow chart showing steps of a communication method for a user equipment, and
- **Fig. 20**: is a flow chart showing steps of a communication method for a network node.
- **Fig. 21A**: Is a schematic drawing showing an SSB as defined, for instance, in NR.
- **Fig. 21B**: is a schematic drawing of a communication system for multi-beam communication of a gNB with two UEs.
- **Fig. 22**: is a schematic drawing illustrating the arrangement of a supplementary synchronization signal between SSBs in time.
- **Fig 23.**: is a block diagram showing a base station and a communication device in a communication system for the embodiment with supplementary synchronization signaling.
- **Fig. 24**: is a schematic drawing showing repetitions of a supplementary synchronization signal in time and in frequency resources.
- **Fig. 25**: is a schematic drawing showing arrangements in time of a supplementary synchronization signal comprising two signals.
- **Fig. 26**: is a flow chart showing the steps of a UE searching a supplementary synchronization signal in occasions therefore.
- **Fig. 27**: is a schematic drawing showing mapping or skipping mapping of supplementary synchronization signals to respective occasions based on a first threshold.
- **Fig. 28**: is a schematic drawing showing mapping or skipping mapping of supplementary synchronization signals to respective occasions based on a second threshold.
- **Fig. 29**: is a schematic drawing of a WUS comprising supplementary synchronization signaling.
- **Fig. 30A**: is a schematic drawing showing supplementary synchronization signaling (SS) with additional signaling of multiple control signals to a UE group.
- **Fig. 30B**: is a schematic drawing showing supplementary synchronization signaling with additional signaling of a respective control signal to each of a plurality of UE groups.
- **Fig. 30C**: is a schematic drawing showing alignment of the central frequency of SSBs and a supplementary SS.
- **Fig. 31**: is a schematic drawing showing the frequency resources of SSBs and supplementary SS deviating by less than a threshold.
- **Fig. 32**: is a schematic drawing showing a frequency threshold for a frequency deviation between SSB and supplementary SS which determines whether supplementary SSs are sent.
- **Fig. 33**: is a schematic drawing showing a time threshold following each SSB and deciding whether a supplementary SS is mapped to an occasion.
- **Fig. 34**: is a flow chart showing establishing quasi-co-location (QCL) and channel state information (CSI) based on supplementary SS.
- **Fig. 35**: is a flow chart showing performing automatic gain control (AGC), radio resource measurement (RRM) and beam tracing based on supplementary SS.
- **Fig. 36**: is a flow chart showing steps of a communication method for a user equipment, and
- **Fig. 37**: is a flow chart showing steps of a communication method for a network node.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

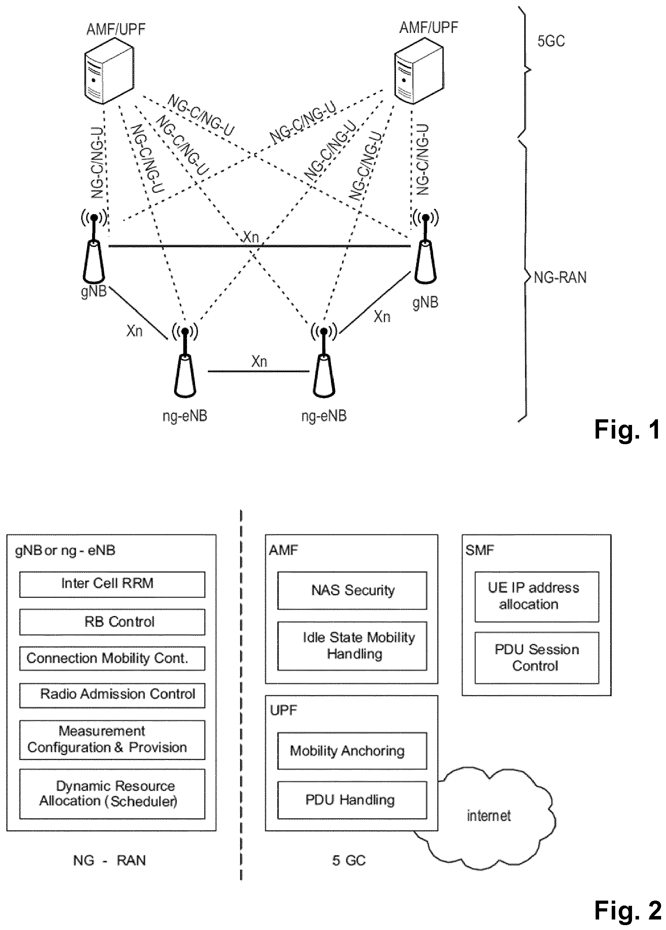

Among other things, the overall system architecture assumes an NG-RAN (Next Generation - Radio Access Network) that comprises gNBs (gNodeB), providing the NG-radio access user plane (SDAP/PDCP/RLC/MAC/PHY) and control plane (RRC, Radio Resource Control) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), and/or massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

In NR, a resource block (RB) is defined as 12 consecutive subcarriers in frequency domain. Resource blocks are numbered from zero upwards in frequency domain as Common resource blocks for a subcarrier spacing configuration. Physical resource blocks (PRBs) are defined within a bandwidth part (a subset of contiguous common resource blocks) and numbered per bandwidth part.

### 5G NR functional split between NG-RAN and 5GC

Fig. 2 illustrates functional split between NG-RAN and 5GC. NG-RAN logical node is a gNB or ng-eNB (next generation eNB). The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or CAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS (Non-access stratum) messages;
- Radio access network sharing;
- Dual Connectivity;
- Tight interworking between NR and E-UTRA.

The Access and Mobility Management Function (AMF) hosts the following main functions:
- Non-Access Stratum, NAS, signaling termination;
- NAS signaling security;
- Access Stratum, AS, Security control;
- Inter Core Network, CN, node signaling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UUDL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

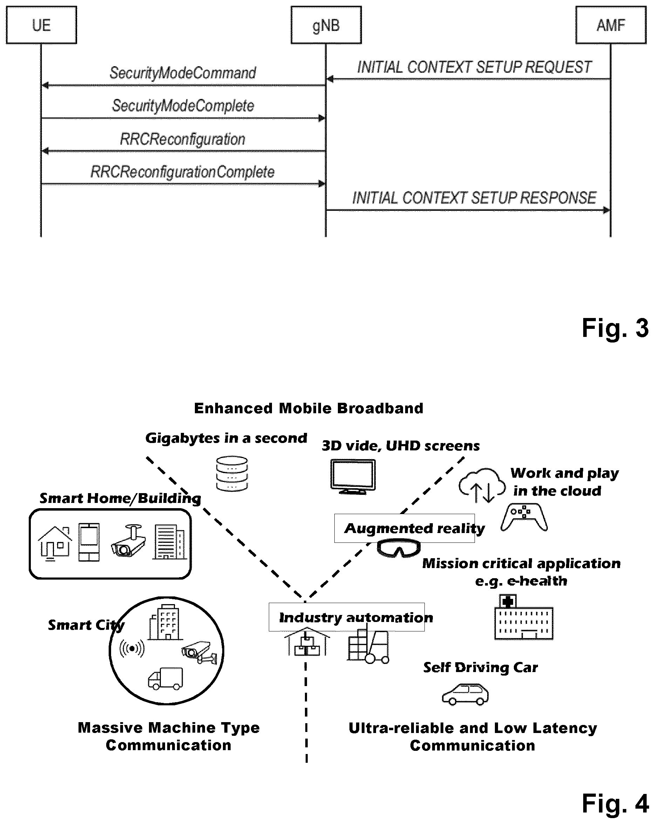

Fig. 3 illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

Fig. 4 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. Fig. 2 of ITU-R M.2083).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI (Downlink Control Information) formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A

(URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from the physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising e.g. fourteen symbols).

In slot-based scheduling or assignment, a slot corresponds to the timing granularity (TTI - transmission time interval) for scheduling assignment. In general, TTI determines the timing granularity for scheduling assignment. One TTI is the time interval in which given signals is mapped to the physical layer. For instance, conventionally, the TTI length can vary from 14-symbols (slot-based scheduling) to 2-symbols (non-slot based scheduling). Downlink (DL) and uplink (UL) transmissions are specified to be organized into frames (10 ms duration) consisting of 10 subframes (1 ms duration). In slot-based transmission, a subframe is further divided into slots, the number of slots being defined by the numerology / subcarrier spacing. The specified values range between 10 slots per frame (1 slot per subframe) for a subcarrier spacing of 15 kHz to 80 slots per frame (8 slots per subframe) for a subcarrier spacing of 120 kHz. The number of OFDM symbols per slot is 14 for normal cyclic prefix and 12 for extended cyclic prefix (see section 4.1 (general frame structure), 4.2 (Numerologies), 4.3.1 (frames and subframes) and 4.3.2 (slots) of the 3GPP TS 38.211 V15.3.0, Physical channels and modulation, 2018-09). However, assignment of time resources for transmission may also be non-slot based. In particular, the TTls in non slot-based assignment may correspond to mini-slots rather than slots. I.e., one or more mini-slots may be assign to a requested transmission of data/control signaling. In non slot-based assignment, the minimum length of a TTI may for instance be 1 or 2 OFDM symbols.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

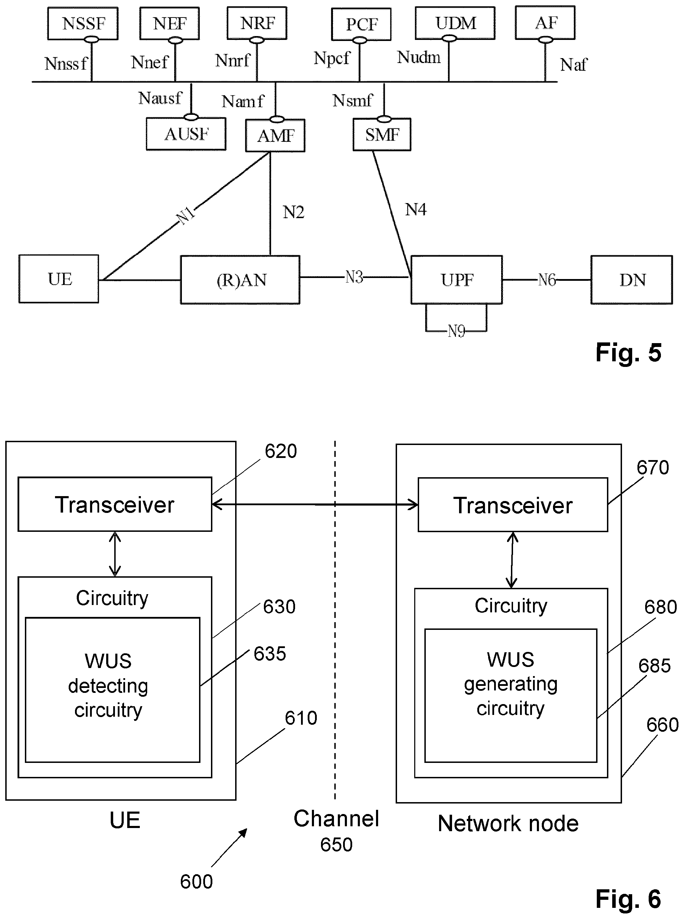

Fig. 5 illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to directly access the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF, UPF, etc.) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Reference Signals

In the present disclosure, the reference signals are signals known to both a base station and a mobile station and each reference signal may be referred to as a Reference Signal (RS) or sometimes a pilot signal. The reference signal may be any of a Demodulation RS (DMRS), a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band. Each band may include one or more component carriers. Each component carrier constitutes a time-frequency resource grid including resource elements, each resource element defined by a subcarrier in frequency domain and a symbol in time domain.

### Communication

The present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signaling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Terminology

In the following, UEs, base stations, and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### User Equipment

A *terminal* or *user terminal* or *user device* or *mobile station* or *mobile node* is referred to in the LTE and NR as a *user equipment (UE).* This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Network node

In the present disclosure, the *base station* may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a *scheduling node* or *network node,* e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term "*base station*" or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

### Power saving

A new study item has been started within 3GPP, aiming at studying and evaluating low-power wake-up receiver (LP-WUR) architectures and wake-up signal (LP-WUS) designs to support wake-up receivers. One of the targets is to achieve a substantial UE power saving gain. A report capturing this study item is available at www.3gpp.org and titled "Low-power Wake-up Signal and Receiver for NR as a Rel.18 SI topic" with contribution number RP-221271 from 3GPP TSG RAN meeting #96 in Hungary, June 6- 9, 2022.

Accordingly, power consumption depends on the configured length of wake-up periods, e.g., paging cycle. To meet the battery life requirements above, eDRX (extended Discontinuous Reception) cycle with large value is expected to be used, resulting in high latency, which may not be suitable for such services with requirements of both long battery life and low latency. Especially for latency-critical use cases, eDRX is not suitable.

Currently, UEs need to periodically wake up once per DRX cycle, which dominates the power consumption in periods with no signaling or data traffic. DRX is used in RRC idle mode when monitoring for paging messages. Accordingly, a UE does not have to monitor all PDCCH transmission opportunities, but rather only the paging occasions, and can thus better preserve battery power. In connected mode, DRX allows a UE to enter into a "sleep" sate during which it does not need to monitor PDCCH. The UE periodically wakes up to monitor PDCCH or to send a scheduling request for initiating an uplink data transfer. Thus, a base station (gNB) is required to wait until the UE becomes active and only then transmit data to it. Uplink is not delayed, unless the base station configures uplink scheduling request period according to the downlink DRX cycle.

DRX cycle in connected mode is configured by RRC. An inactivity timer is started after each PDCCH reception. After expiry of the inactivity timer, there may be an optional period of short DRX cycles, before the regular (long) DRX cycles. The active period in which the UE reads PDCCH is referred to as "OnDuration" or "DRX active" state. The sleeping period in which the UE does not read PDCCH is referred to as "OffDuration" or "DRX inactive" state. A base station has the possibility to send a UE into the DRX inactive mode anytime by using MAC signaling.

Since Release16, a wake-up signal (WUS) has been provided by a DCI format 2_6. The DCI format 2_6 has been used to wake up a UE or to indicate to a UE to skip PDCCH monitoring before DRX. In particular, this DCI is used for notifying the power saving information outside DRX Active time for one or more UEs. The DCI is scrambled by PS-RNTI and carries:
- Wake-up indication whether the UE is to enter a dormancy state or wake up from the dormancy state; and
- an SCell dormancy indication which is a bitmap where each bit corresponds to one of the SCell group(s) configured by higher layers (RRC), with MSB to LSB of the bitmap corresponding to the first to last configured S
- Cell group. This indicates for which SCells the wake-up indication applies.

In more detail, Section 7.3.1.3.7 of 3GPP TS 38.212 v17.2.0 defines the Format 2_6. Accordingly, DCI format 2_6 is used for notifying the power saving information outside DRX Active Time for one or more UEs. The following information is transmitted by means of the DCI format 2_6 with CRC scrambled by PS-RNTI: *block number 1, block number 2,..., block number N.* The starting position of a block is determined by the parameter PSPositionDCI2-6 provided by higher layers for the UE configured with the block. If the UE is configured with higher layer parameter PS-RNTI and dci-Format2-6, one block is configured for the UE by higher layers, with the following fields defined for the block: Wake-up indication (1 bit), SCell dormancy indication - 0 bit if higher layer parameter Scell-groups-for-dormancy-outside-active-time is not configured; otherwise 1, 2, 3, 4 or 5 bits bitmap determined according to higher layer parameter Scell-groups-for-dormancy-outside-active-time, where each bit corresponds to one of the SCell group(s) configured by higher layers parameter Scell-groups-for-dormancy-outside-active-time, with MSB to LSB of the bitmap corresponding to the first to last configured SCell group. The size of DCI format 2_6 is indicated by the higher layer parameter SizeDCI_2-6.

UE may save power by skipping unnecessary PDCCH monitoring period using format 2_6 DCI. The dormancy can be configured and applied for RRC CONNECTED UEs.

In Release17, a Paging Early Indication (PEI) design has been introduced. It employs DCI format 2_7. DCI format 2_7 is used to indicate UEwhether it needs to skip or monitor its paging occasions in each paging cycle. Accordingly, a UE may save power by reducing synchronization signal block (SSB) measurements before detecting PEI, compared with the conventional paging detection, which potentially requires measuring more SSBs. The PEI can be configured in SIB and applied for paging monitoring of both RRC CONNECTED and IDLE/INACTIVE UEs.

If UEs are able to wake up only when they are triggered, e.g., paging, power consumption could be dramatically reduced. This can be achieved by using a wake-up signal to trigger the main radio and a separate receiver which has the ability to monitor wake-up signal with a very low power consumption. Main radio may work for data transmission and reception, which can be turned off or set to deep sleep unless it is turned on. The power consumption for monitoring wake-up signal depends on the wake-up signal design and the hardware module of the wake-up receiver used for signal detecting and processing.

In order to target low-power WUS/WUR for power-sensitive, small form-factor devices including loT use cases (such as industrial sensors, controllers) and wearables, signal design and transmitter / receiver operations have to be considered carefully. Other use cases are not precluded, such as XR/smart glasses, smart phones, and the like.

In other words, Release 18 LP-WUS/WUR design aims for LP-WUS which is friendly for more efficient receiver structure, e.g. separate module for LP-WUS detection with relaxed requirement on time/frequency synchronization. The legacy design has been basically DCI-based, which requires UE to firstly measure one or more SSBs for AGC training and time/frequency synchronization before detection. Long active time for receiving and processing SSBs is the main source of power consumption.

### Wake-up signal using muted resource elements

According to an embodiment, a signal is provided (referred to in the following as wake-up signal, WUS), that includes one or more muted resource elements.

Resource element is a unit of resources such as the smallest resource unit. In NR, as described above, a resource element is defined by a subcarrier in frequency domain and by a symbol (such as OFDM symbol) in time domain. However, the present disclosure is not limited to resource element definition as currently in NR. Rather, it may be a resource element in other resource domains than the time-frequency domain.

The term muted means that the transmitter does not transmit any power. Accordingly a muted resource element is a resource element in which the transmitter does not transmit any power. It is noted that at the receiver, even in the muted resource elements, some power may be measured. Such power may be caused, for example, by interference.

Provision of the WUS that includes one or more muted resource elements may provide some advantages. For example, a detection of a muted resource requires only a very low processing complexity. Thus, a UE may be capable of achieving more power saving gain. In some implementation, a UE may include a dedicated WUS detection module while switching off (or at least not using) the remaining modules. For example, the dedicated module may be capable to merely detect the muted resource element, i.e. to distinguish the muted received resource elements from unmuted resource elements. Forward error correction (FEC) decoding and possibly demodulation may not be necessary for the detection of the muted resource elements, so that the corresponding modules may be switched-off (or at least do not need to be used).

In other words, the WUS signal that includes one or more muted resource element is suitable for being detected on physical layer with only very little of physical layer processing at all.

In the present disclosure, UE operation in which the UE is required to monitor WUS, but not to monitor any other channels will be referred to as low-power (LP) operation. The LP operation and LP-WUS differ from the dormancy indication on DCI level in that reception of the LP-WUS merely requires detection of muted one or more resource elements. In contrast, DCI detection requires demodulation and decoding as well as possibly further physical layer processing such as beamforming or monitoring of the PDCCH my way of descrambling of the CRC with an appropriate RNTI. The LP operation differs from DRX in that the DRX is based on a pre-configured (by RRC or SIB) DRX cycles so that the network node (base station) cannot flexibly command the UEs to enter inactive mode. The possibility of doing so on MAC level involves complexity of processing the MAC signaling on both MAC layer and physical layer.

In particular, embodiments will be discussed, in which a UE monitors a signal (LP-WUS), which consists of or more blank and muted resource elements or symbols mapped in the configured resource. In some more specific implementations, the UE may monitor a WUS which consists of one or more sequences of muted/unmuted resource elements or symbols mapped to the resource elements or symbols in the configured resource. Based on the information obtained by the detection of the WUS, a UE may determine whether to continue receiving/transmitting signal(s) other than the WUS. The information may be based on one or more of:
- The detected resource position(s) of the muted (blank) resource
- The detected resource position(s) of unmuted (non-blank) resource

In case of WUS that includes a sequence of muted and unmuted resources, a sequence ID or index may be used to indicate some additional information. There may be some information bits modulated by the sequence.

More detailed exemplary implementations of such LP WUS and devices and methods that generate or detect the WUS will be provided in the following. The present disclosure provides a network node (e.g. a base station) and a user equipment. The present disclosure further provides a system including the network node and the user equipment, as well as corresponding methods and programs.

An example of such communication system is illustrated in Fig. 6. The communication system 600 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

Fig. 6 illustrates a general, simplified and exemplary block diagram of a communication device 610 (here exemplarily assumed to be a UE) and a network node 660 (here exemplarily assumed to be located in a base station, e.g. in a LTE eNB (alternatively termed ng-eNB) or the gNB in 5G NR). However, in general, a network node may also be a terminal in case of a sidelink connection between two terminals. Moreover, in particular with respect to the use cases of URLLC; eMBB, and mMTC, the UE 610 may also be a sensor device, a wearable device, or a connected vehicle, or a controller of an automated machine in an industrial factory. Further, a UE 610 may be able to function as a relay between a base station and another communication device (e.g. the disclosure is not limited to communication "terminals" or user "termi nal s").

As illustrated in Fig. 6, the UE 610 and the network node 660 (eNB/gNB) may communicate with each other over a (wireless) physical channel 650 respectively using their transceivers 620 (UE side) and 670 (network side). Together, the network node 660 and the UE 610 form the communication system 600. The communication system 600 may further include other entities such as those shown in Figs. 1, 2, or 5.

As illustrated in Fig. 6 (left-hand side), a UE 610 may comprise the transceiver 620 and circuitry (or, more specifically, processing circuitry) 630. The network node 660 may comprise a transceiver 670 and a (processing) circuitry 680. The *transceiver* in turn may comprise and/or function as a receiver and/or a transmitter. In this disclosure, in other words, the term "*transceiver*" is used for hardware and software components that allow the communication device, or, respectively base station to transmit and/or receive radio signals over a wireless channel. Accordingly, a transceiver corresponds to a receiver, a transmitter, or a combination of receiver and transmitter. Typically, a base station and a UE are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. Moreover, the term "circuitry" includes processing circuitry formed by one or more processors or processing units, or other hardware such as FPGAs, ASICs, or other components. The circuitry mentioned herein may also form integrated circuit or be implemented on a single chip

A transmitter may be responsible for performing the process of transmitting and other processes related thereto. A receiver may be responsible for performing the process of receiving and other processes related thereto, such as monitoring a channel.

A ***circuitry*** or ***processing circuitry*** may be one or more pieces of hardware such as one or more processors or any LSIs. Between the transceiver and the processing circuitry there may be an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. For instance, base band processing including demodulation and decoding may be performed by the circuitry.

The UE 610 may be a UE capable of detecting the above mentioned WUS. In particular, according to an exemplary implementation, the UE 610 comprises the transceiver 620 which is configured to receive a wireless signal. In preconfigured resources including resource elements mentioned below.

Moreover, the UE 610 comprises the circuitry 630 which is configured to
- detect, in the received wireless signal, whether or not a pre-configured wake-up signal, WUS, is present, wherein the WUS includes one or more of muted resource elements, and
- in case WUS is detected as present, determine that the user equipment is to receive control signals different from WUS.

The circuitry 630 of the UE may include, for the above mentioned functionality of detecting the WUS, the corresponding WUS detecting circuitry 635.

It is noted that the detection may be performed while the UE is in a low-power (LP) state. The LP state means that the UE does not monitor PDCCH and/or synchronization channel. It may, more strictly, mean in some implementations that the UE 610 does not monitor any other control or data channels apart from the WUS. The determining that the UE is to receive control signals different from WUS may thus correspond to a decision to leave said low-power state.

The WUS may be pre-configured in any manner. For example, the WUS may be defined in standard and thus pre-configured at the UE or configured by the network node using system information or using RRC. The pre-configuration may be a mix of these configuration means. For example, the form of the WUS may be defined in the standard, but WUS occasions may be configured in SIB per cell or per group of UEs and/or indicated by RRC to a UE. RRC may be used to indicate to a UE a UE dedicated WUS occasion configuration. Such WUS occasion configuration specifies, for instance, in which resources the UE shall monitor WUS, i.e. resources in which the UE 610 is to detect the presence or absence of the WUS.

The detection of the WUS may include measuring power within the resource elements at preconfigured locations that may carry the WUS. Such pre-configured locations may be the preconfigured WUS occasions. For instance, the detection may involve comparing the power received within a resource element and deciding on whether or not the resource element is muted based on whether or not the received power is lower than a certain threshold. The threshold may be defined by the standard or configurable by the network node or determined by the UE based on some rule(s) or indications signaled.

For example, power received in one RE that is preconfigured to possibly carry WUS is measured. If the measured result exceeds the threshold, then the UE shall not wake up. If, however, the power is less than the threshold, the UE shall wake up. In order to make the WUS detection more reliable, there may be more than one locations of resource elements which are muted and in which the UE is to measure power and conclude whether they are muted or not. The waking up may be performed only if all the measured resource elements were measured as muted. However, the present disclosure is not limited to such an approach and, in general, any number of the resource elements configured to carry WUS and measured as muted may be sufficient to wake up the UE.

The UE 610 may be capable of, after detecting the presence of the WUS, deciding whether or at which time to leave the LP state. In this way, a UE may adapt the timing of leaving the LP state to its own implementation, e.g. to the delay necessary for re-staring the modules that have been switched off (or have not been used) during the LP state and are to be used by the UE when not in the LP state.

The network node 660 of Fig. 6 includes the circuitry 680 that is configured to:
- determine whether or not a user equipment, UE, is to receive control signals different from a pre-configured wake-up signal, WUS, and
- include, into a wireless signal, the WUS in case it is determined that the UE is to receive said control signals, wherein the WUS includes one or more of muted resource elements.

Moreover, the network node comprises the transceiver 870 that is configured to transmit the wireless signal.

The determination whether or not a UE is to receive other signals than the WUS may be performed by the network node based on the traffic currently available for transmission to the UE, based on UE capabilities, based on resource management strategy of the network node, based on the channel quality and interference levels or the like. In other words, the network node may select the UEs to wake up and send them the WUS accordingly.

As mentioned above, the WUS may be dedicated to a UE or group common, i.e. common for a group of UEs. Alternatively, the WUS may be common for all UEs in a cell.

Regarding the WUS, in an exemplary implementation, the WUS includes a predefined sequence of one or more muted resource elements and one or more unmuted resource elements. Detection of a sequence with muted and unmuted resource elements may facilitate an increased detection robustness in comparison with detecting isolated unmuted elements. Moreover, provision of a sequence may allow for carrying some information, e.g., in selection of the sequence and/or for accommodating, in the same resources a plurality of, e.g., orthogonal sequences for respective UEs or UE groups or the like.

In general, the WUS sequence may be carried by respective resource elements in any domain(s) of the communication system. In the specific example of OFDM, the sequence may be carried by pre-configured resource elements (resource elements in pre-configured locations), which may be, but do not have to be consecutive in time domain. For one time domain instance, the WUS may be defined on one or more subcarriers, e.g. consecutive subcarriers. The time instance here corresponds to one symbol - a symbol may be considered as one time instance in some communication systems as it the smallest unit of time to carry data, corresponding to resource element definition.

In the following, specific examples of a WUS sequence in time domain (a) and a WUS sequence in frequency domain (b) are discussed.

### a. WUS sequence in time domain

In this specific example, the WUS includes the predefined sequence of muted and unmuted resource elements in time domain of a time-frequency resource grid.

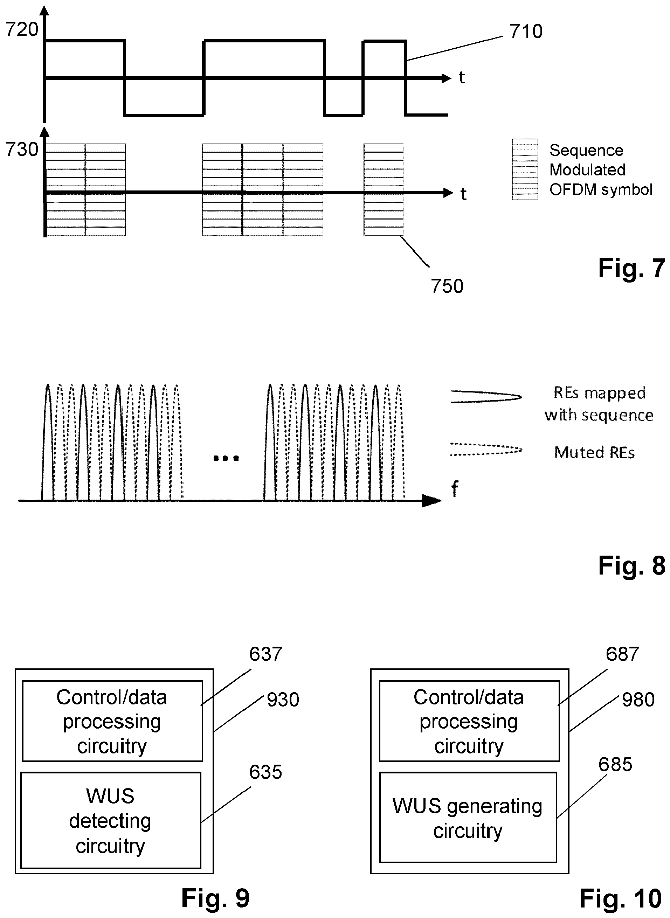

This is illustrated in Fig. 7. Fig. 7 shows a LP-WUS 710, whose structure consists of muted symbols that may be represented by '0' in some symbols and unmuted symbols that may be represented by '1' in other symbols, thus forming a sequence of bits "1100111010". This is shown in the upper portion of Fig. 7 with horizontal axis t corresponding to time and vertical axis 720 corresponding to amplitude of the signal. It is noted that the amplitude of the unmuted signal (corresponding to power with which the unmuted portions of the WUS are transmitted) may be pre-configured by standard or by signaling from the network node 660 to the UE 610. The signaling may be direct signaling of the power to be transmitted, or a signaling of ration between the WUS power and power of another signal such as synchronization signal or a reference signal or the like that is already known (e.g. has already been pre-configured) at the UE and the network node. In the example of Fig. 7, the sequence is carried in the time domain by consecutive symbols (resource elements).

In the example of Fig. 7, the WUS thus includes the predefined sequence of muted symbols and unmuted symbols in time domain. Each of said symbols corresponds to a plurality of resource elements associated with the same time, and in particular to a plurality of subcarriers in a time-frequency resource grid of an orthogonal frequency division system. This is illustrated in the bottom part of Fig. 7. In particular, the bottom part of Fig. 7 has a horizontal time axis t and a vertical axis 730 which is a frequency axis. Thus, '1' is represented by an unmuted symbol 750 in time domain that corresponds to one time instance in time domain and a plurality of subcarriers.

For example, the plurality of subcarriers in one symbol corresponds to all those subcarriers that are transformed by an orthogonal transformation to form the symbol in the time domain. In other words, the number of subcarriers of the symbol is given by the size of the transformation applied to convert the plurality of subcarriers to the time domain symbol and inverse transformation to convert the time domain symbol into a plurality of subcarriers. The subcarriers may be orthogonal as in OFDM system. In other words, Fig. 7 illustrates an example in which WUS is carried by a sequence of muted and unmuted OFDM symbols. Although NR is based on OFDM, the present disclosure is not limited to OFDM and is applicable to other systems such as SC-FDM, S-DCT-FDM or the like.

It is noted that an unmuted symbol (e.g. an unmuted OFDM symbol) does not necessarily mean that all resource elements (subcarriers) must be unmuted. It is sufficient that one or more of the subcarriers of the symbol are unmuted. Even with one subcarrier unmuted, a detection on whether or not the symbol is muted or unmuted is feasible. The spectral shape of the symbol (which subcarriers are to be muted and which are to be unmuted) may be prescribed by the standard or configured by signaling or a combination of both.

Using all subcarriers of a component carrier belonging to the time domain symbol to indicate the WUS may provide some additional advantages for systems in which information is carried in subcarriers that are (inverse) transformed to a time domain symbol. For example, distinction between the muted and unmuted symbols may be performed without having to perform the transformation into frequency (subcarrier) domain at the receiver. In particular, the WUS may be detected particularly efficiently - with a low complexity and thus low power cost. For instance the detection may be based by evaluating the received power per symbol in the time domain. As mentioned above, the detection may be performed by comparison with a pre-configured threshold.

Although it may be advantageous to mute / unmute the entire symbol in time domain of a component carrier, the present disclosure is not limited to such exemplary implementation. One WUS would in such exemplary implementation occupy entire one or more symbols. In order to increase efficiency of resource utilization, it may be possible to merely multiplex the WUS in frequency domain with data or control information or reference signals e.g. pertaining to other UEs. In such case, only one or more subcarriers of the component carrier, but not all of them would be used for WUS. Although in such cases the UE may have to perform the transformation into frequency domain in order to extract power levels of the resource elements carrying WUS, still processing complexity and power may be saves in that no demodulation or decoding or other processing is necessary. It may be even feasible to distinguish between the muted and unmuted resources and thus detect the WUS without transformation in cases in which multiplexing with other data is performed only in the unmuted resources but not in the muted resources.

One of the benefits of detecting a sequence of muted/unmuted resource elements is the possibility of embedding some additional information into the sequence.

The UE monitors pre-configured resources for occurrence of the WUS. For example, the UE determines to start to receive other signals (e.g. SSB, PDCCH) or not, based on information from the detection of LP-WUS. The information obtained by the detection may be the resource position of the '0' and/or non-`0' bits (muted and/or unmuted resource elements or symbols). Whether or not the UE only detects location of the muted elements or only of the unmuted elements or both may be left to the UE implementation. For more robustness, the WUS sequence detection may include correlation of the pre-configured WUS sequence with the received signal (signal received in the pre-configured resource elements or symbols in which the WUS is monitored).

If the presence of WUS is positively confirmed - e.g. by detecting all or most of muted resource elements in the expected location with the system resources - the UE may wake up, e.g. start to receive signals other than the WUS, i.e. monitor other synchronization or control resources than the WUS occasions. For example, after the presence of the WUS has been positively detected by the UE, the next step may be monitoring of the SSB and/or PDCCH.

In addition, the WUS sequence may carry additional information, such as an ID of the detected sequence or some bits that are assigned to the sequence or to the respective muted/unmuted levels. For example, different UEs may use different sequences. The information carried by the WUS sequence may be some control information as will be described in more details later on.

Some advantages of signaling the WUS in a time domain sequence may be that the receiving UE may be capable of saving power by detecting the 0/non-0 positions with just energy detection and/or low complexity sequence correlation in time domain. This is friendly for low power receiver design with a structure supporting a dedicated module for LP-WUS detection.

### b. WUS sequence in frequency domain

In a specific example, the WUS includes the predefined sequence of muted and unmuted resource elements in frequency domain of a time-frequency resource grid.

This is illustrated in Fig. 8. In particular, Fig. 8 shows a horizontal frequency axis on which the subcarriers are illustrated by solid or dashed lines. In the example of Fig. 8, all subcarriers are within the same symbol, i.e. associated with the same time instance. Solid lines indicate unmuted resource elements (subcarriers with non-zero signal transmitted) and dashed lines indicate muted resource elements (subcarriers with zero signal transmitted). In this example, the muted and unmuted resource elements (consecutive in frequency domain) form one or more WUS sequences.

Although in this specific example, the WUS sequence (or sequences) is mapped to muted and unmuted resource elements in frequency domain rather than in time domain, the UE behavior may be similar as described above with reference to the WUS sequence in time domain. For example, the UE may determine to wake up and start to receive other signals (e.g. SSB, PDCCH) or not, based on information from the detection of LP-WUS. The information from the detection may be the presence or absence of the WUS sequence that may be detected by detecting the resource positions of the '0' and/or non-'0' bits, e.g. a comb position corresponding to muted and unmuted subcarriers. Some UEs may detect the WUS sequence by merely detecting presence and/or absence of power (energy) in the subcarriers of the WUS occasion. Some UEs may perform correlation of the pre-configured WUS sequence with the power (energy) detected in the subcarriers of the received symbol pertaining to WUS occasion. The detected WUS sequence may carry information such as a sequence ID of the WUS sequence or modulated bits (bits that are modulated by the WUS sequence) as mentioned above for the time domain. Position of muted and unmuted resource elements in the frequency domain may be defined in the standard and/or pre-configured by signaling from the network node to the UE (e.g. per RRC or system information). The WUS sequence may be common for all UEs in a cell or common to a group of UEs or UE specific.

Muting in the frequency domain can reduce the inter-symbol interference and improve the coverage performance. This can also relax time synchronization requirement of receiver, which may be beneficial for lower power receiver design, with a structure supporting a dedicated module for LP-WUS detection.

The above specific examples described with reference to Figs. 7 and 8 are not to limit the present disclosure. It is noted that it is not necessary, in general, to provide a WUS that is consecutive in time domain and/or in frequency domain. The WUS may be carried in resource elements that are scattered in the time-frequency resources of the component carrier.

Irrespectively of whether the WUS sequence is located in time and/or frequency domain, as mentioned above, the WUS sequence may be used to carry some information. In some exemplary implementations, such information is modulated into the muted / unmuted elements, e.g. with muted elements corresponding to bit '0' and unmuted elements corresponding to bit '1' or vice versa or the like. However, the information may also be carried by the identity of the sequence.

For example, the predefined sequence is one of a plurality of predefined sequences that correspond to WUS. Each of the plurality of predefined sequences is associated with a respective content of a control information.

For example, each of the plurality of sequences may be associated with a sequence identifier (sequence ID). One sequence ID may be assigned to a first UE while another sequence ID may be assigned to a second UE, etc. In other words, by using a WUS sequence with a particular sequence ID, the respective UE to which the sequence ID is assigned may detect the sequence presence and determine to wake up accordingly. Other UEs that are assigned different sequence(s) would detect absence of their assigned sequence(s) and not wake-up.

In an exemplary implementation, the plurality of sequences are mutually orthogonal sequences. In such case, they may be transmitted in the same resources (e.g. symbols and/or subcarriers). For example, three different and mutually orthogonal WUS sequences may be transmitted in the same resource elements to three respective different UEs to wake them up. Each UE may detect whether or not its assigned WUS sequence is present in said resource elements by correlating the assigned WUS sequence with the power (energy) received in the resource elements. The plurality of sequences that are used to indicate WUS to one or more UEs may be a subset of all or all possible mutually orthogonal sequences.

It is noted that a WUS sequence (WUS sequence ID) does not have to be assigned to respective UEs as described above. In some exemplary implementations, a WUS sequence is assigned to a cell or to a group of UEs. In other words, there may be an association between the WUS sequence (WUS sequence ID) and a cell ID or an association between the WUS sequence (WUS sequence ID) and a group ID. A group ID identifies a group of particular UEs.

Such association between a specific WUS sequence and a UE ID or a cell ID or a group ID may be understood as the WUS sequence carrying control information, namely an information corresponding to the UE ID, cell ID or group ID. The present disclosure is not limited to this control information.

Rather, in addition or alternatively to UE ID and/or cell ID and/or group ID, the WUS sequence may be used to indicate one or both of:
- offset after which the user equipment is to monitor a signal other than the WUS, and
- that the user equipment is to start monitoring a system synchronization signal, and/or a physical downlink control channel, PDCCH.

For example, a first specific sequence may indicate that the UE is to monitor SSB, a second specific sequence may indicate that the UE is to monitor PDCCH, and the third specific sequence may indicate that the UE is to monitor both the SSB and the PDCCH. If the sequences are orthogonal, the third specific sequence may be unnecessary, as the same may be indicated by transmitting at the same time both the first and the second sequence. This is only one possible example. In another example, there is one specific sequence that signals that the UE is to detect both SSB and PDCCH and there is no sequence that would allow for distinction between detecting SSB and detecting PDCCH.

The offset may be an offset in time domain. It may be specified in any appropriate unit, e.g. in a number of symbols or slots or subframes or the like. It is conceivable to also indicate frequency resource(s) on which the other signal is to be expected. The frequency resource may indicate any bandwidth portion such as a carrier, subcarriers, or the like.

Inclusion of further or alternative control information is possible. It is noted that WUS sequence does not have to carry additional information and may be merely used to detect whether or not to wake up.

In any of the preceding examples, said one or more of muted resource elements corresponding to the WUS or the WUS sequence may be configured in a system information or by a message received by the user equipment within a radio resource control, RRC, protocol message. For example, WUS configuration common to all UEs in a cell or common to a group of UEs may be signaled in system information (e.g. in one of the system information blocks, SIBs). WUS configuration specific to a UE may be signaled to the UE via an RRC protocol message. However, RRC message may also include the dell common or group common WUS configuration. The WUS configuration may include the configuration of WUS occasions, e.g. in which resource elements the UE(s) is/are to detect presence or absence of the WUS. This may be done by specifying periodic time intervals after which a UE is to perform detection of WUS and/or by specifying the frequency resources to monitor (component carrier, cells, subcarriers, or the like).

In the above examples, a UE detects whether a pre-configured WUS is present in the preconfigured resources (resource elements). If it is present, the UE wakes up (leaves the LP state). If it is not present, the UE does not wake up (does not leave the LP state). However, the present disclosure is not limited to detecting presence of WUS to wake up. It is conceivable to wake up if an absence of the WUS is detected. It is also conceivable to wake up if a first specific WUS is detected and not wake up if a second specific WUS is detected. The term "specific WUS" denotes a specific, pre-configured one or more muted resource elements or a sequence of muted/unmuted resource elements as described above.

As mentioned above, the control signals different from WUS may include synchronization signal and/or system information and/or PDCCH. However, the present disclosure is not limited thereto and the WUS may indicate that the UE is to monitor only certain information in PDCCH (apply a certain subset of all configured RNTIs for detection of the DCIs) or the like. Alternatively or in addition, the WUS may indicate that the UE is to transmit certain signal such as a sounding reference signal or the like or a scheduling request or the like.

The presence of unmuted elements in any of the above mentioned examples may be utilized for measurements of interference. For instance, the circuitry 630 may be configured to perform:
- a measurement of interference based on the power received in said one or more muted resource elements, and/or
- a measurement of Reference Signal Received Power, RSRP, or Reference Signal Received Quality, RSRQ, using the one or more unmuted resource elements as reference signals.

The measurement of interference can be the interference part of a channel state information, CSI, report or a Received Signal Strength Indicator, RSSI, e.g. as defined in NR in 3GPP TS 38.214 (e.g. v17.2.0), Sect. 5.2 and in particular Sect. 5.2.2.4 for CSI and in 3GPP TS 38.215 (e.g. v17.1.0), Sect. 5.1.3, 5.1.4, 5.1.12. or 5.1.16.

In the above examples, a focus has been given to the WUS design and semantics. Such WUS design and semantics may enable various power efficient implementations of UEs and the corresponding implementation of a base station.

The UE 610 includes the circuitry 630. The circuitry 630 may include WUS detecting circuitry 635 as shown in Fig. 6. This circuitry may operate with lower complexity and power consumption. In addition, in an exemplary UE implementation, the WUS detecting circuitry 635 may operate alone and perform WUS detection (corresponding to the LP state). The circuitry 630 may include a separate control/data processing circuitry 637 shown in Fig. 9, which implements physical layer to e.g. demodulate and possibly decode control signals and/or user data (physical layer payload). The control/data processing circuitry 637 may be switched off (not perform any processing) in the LP state. It may be switched on when the WUS is detected by the WUS detecting circuitry 635. Since the control/data processing circuitry 637 is expected to have a larger power consumption (and higher processing complexity) than the WUS detecting circuitry 635, power savings may be achieved.

It is noted that the LP state and WUS detection as described above may coexist with any existing power reduction approaches such as the DRX or the format 2_6 or format 2_7 of DCI mentioned above. In particular, the WUS detection is located lower on the physical layer: in the LP state, the PDCCH is not monitored, so that format 2_6 or format 2_7 of DCI may only be monitored when not in the LP state. Unlike in DRX, in the LP state, paging occasions do not have to be monitored either, to read paging occasions, still a synchronization channel and the PDCCH needs to be read. In the LP state, only the WUS needs to be monitored (detection performed to find out whether or not the WUS is present). As in some embodiments, the WUS is a physical layer signal that does not need to be demodulated or at least decoded as a part of the base band processing, power reduction is expected. When referring here to a demodulation, what is meant is demodulation of signal in the resource elements. OFDM or other transformation based processing may still be performed in some implementations, but does not have to be performed in other implementations as discussed above.

The network node 660 includes the circuitry 680 that may further include WUS generating circuitry 685 that is configured to generate the WUS signal(s) for one or a plurality of UEs. It is noted that apart from the WUS generating circuitry 685, the circuitry 680 may also include control/data processing circuitry 687 as shown in Fig. 10, for performing physical layer processing such as baseband processing of the received signal to detect (e.g. demodulate and decode) or baseband processing to transmit signals (e.g. modulate and code) to the one or more UEs.

It is noted that the WUS signal may be transmitted without beamforming. Alternatively, the WUS signal may be transmitted with beamforming, e.g. carrying a beam index. In some embodiments, the WUS differs for different wireless cells or per UE or a group of UEs.

The present disclosure also provides methods corresponding to the actions described above as performed by the circuitry 630 and the transceiver 620 of the UE and to the actions described above as performed by the circuitry 680 and the transceiver 670 of the network node.

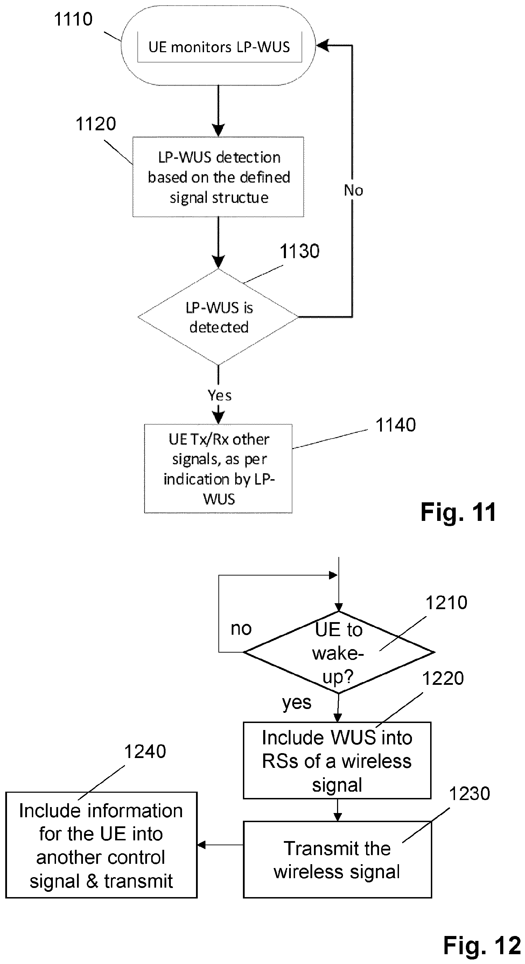

For example, a method is provided for being performed at a user equipment, UE. The method comprises obtaining a wireless signal. In particular, the wireless signal may be received wirelessly by a transceiver of the UE and provided as an input to the method 1110 illustrated in Fig. 11. The method 1110 monitors the resources for WUS. In particular, the monitoring comprises a step 1120 of detecting, in the received wireless signal, whether or not a pre-configured wake-up signal, WUS, is present. The WUS includes one or more of muted resource elements. In case WUS is detected as present ("yes" after bifurcation 1130), the method includes determining that the user equipment is to receive control signals different from WUS. Following the determination, the method may include the actual reception 1140 of the receive control signals different from WUS and/or transmission of signals. The WUS may include specification of the signals to be received / transmitted as discussed above. In case the WUS is detected as absent ("no" after bifurcation 1130), the method returns to the monitoring the WUS.

Similarly, a method is provided for being performed at a network node. The method is illustrated in Fig. 12 and comprises determining 1210 whether or not a user equipment, UE, is to receive control signals different from a pre-configured wake-up signal, WUS. Moreover, the method comprises including 1220, into a wireless signal, the WUS in case it is determined ("Yes" in step 1210) that the UE is to receive said control signals, wherein the WUS includes one or more of muted resource elements. The may further comprise the actual transmitting 1230 of the wireless signal carrying the WUS.

In case it is determined ("No" in step 1210) that the UE is not to receive said control signals, the method returns to step 1210. It is noted that the method my further comprise the transmission 1240 of the control signals to the UE, following the transmission 1230 of the WUS to the UE.

### Two-part wake-up signaling

The shortcomings of the existing power reduction mechanisms described in section "Power saving" may be addressed as described in the above embodiment "*Wake-up signal using muted resource elements"* and/or with an embodiment concerning a two-part wake-up signaling as will be described in the following in more detail. Some combinations of both embodiments may also be advantageous.

In order to provide an efficient power saving mechanism, in the present embodiment, a two-part wake-up signaling is provided, including a wake-up signal, WUS, followed in time domain by a wake-up information, Will, in case the WUS indicates that a UE is to receive control data different from WUS and WUI. It is noted that the WUS in this embodiment may have characteristics as described in the embodiment "*Wake-up signal using muted resource elements",* but it does not have to have them. In other words, the WUS in the present embodiment is not necessarily a signal including one or more muted resource elements.

Adding a second part (WUI) to a wake-up signal may increase the control information capacity, compared with the above mentioned possibility for the WUS to carry additional information. More than that, the benefit of UE power saving and friendliness to dedicated low power receiver may be maintained.

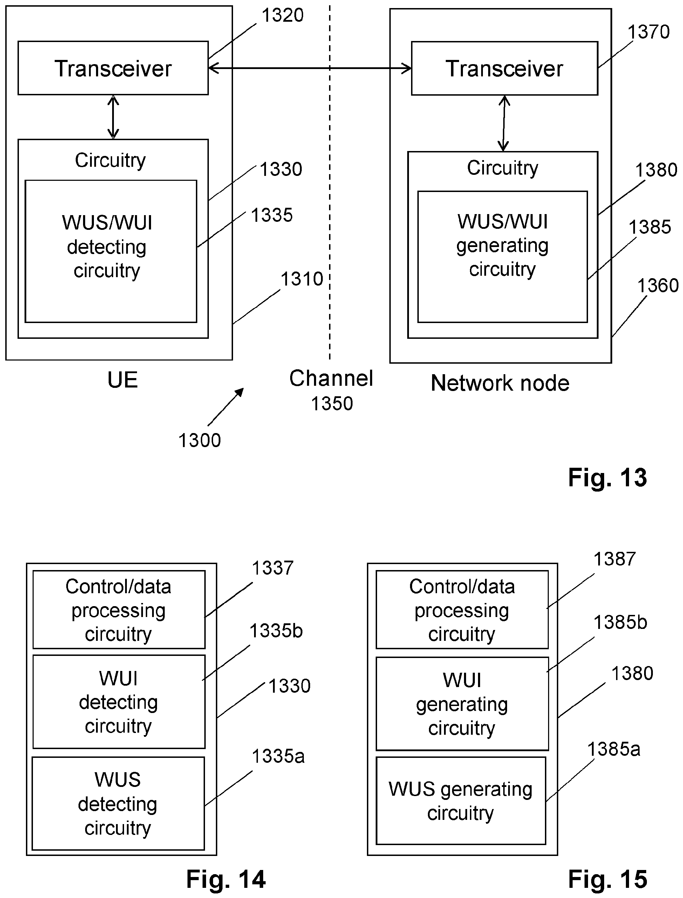

The two-part wake-up signaling is applicable to a communication system 1300 shown in Fig. 13. The communication system 1300 may be a wireless communication system such as NR or the like, similar to the system 600 of Fig. 6. The communication system 1300 includes a UE 1310 and a network node 1360 that communicate with each other via a wireless channel 1350. The UE 1310 has a similar structure as the UE 610 described above with reference to Fig. 6.

The UE 1310 differs from the UE 610 in particular by the WUS/WUI detecting circuitry 1335 included in circuitry 1330 instead of the WUS detecting circuitry 635 included in the circuitry 630. The structure of the transceiver 1320 may be similar as the transceiver 620. In particular, the user equipment 1310 comprises the transceiver 1320 which is configured to receive wireless signals. Such configuration may be achieved (similarly as in case of the transceiver 620) by the transceiver including one or more antennas, amplifier(s), and possibly the modulator from base band into the desired carrier and/or an digital to analog converter. A particular hardware structure may vary with a particular UE implementation and with the characteristics of the wireless communication system.

The UE 1310 further comprises circuitry 1330 which is configured to (in operation):
- detect, in the received wireless signals, presence of a wake-up signal, WUS,
- based on the WUS, determine from the received wireless signals, wake-up information, and
- based on the wake-up information, determine to receive control information other than WUS and wake-up information.

The circuitry 1330 may include the corresponding WUS/WUI detecting circuitry 1335 that performs the above mentioned detection of WUS and determination of WUI as well as determination that further signals are to be received.

It can be considered that a UE only monitoring for the WUS is in a low power (LP) state. Once the UE starts receiving signals other than WUS and WUI, the UE may be considered to leave the LP state. Reception of the WUI may be also considered to pertain to the LP state.

As described for the preceding embodiment, the detection of WUS may be performed within resources that are pre-configured for the WUS, e.g. in resources configured at the UE before the UE enters the LP state. Such resources may be periodic or regular. LP state is the state in which the UE reads only WUS and possibly WUI, but not other signals and in particular not the PDCCH or another kind of signaling.

Examples of determining (from the received wireless signals) the wake-up information based on the WUS include the determining based on location and/or based on content of the WUS.

In the following, the WUS part of waking-up signaling may be referred to as part 1 signaling, whereas the WUI part of the waking up signaling may be referred to as part 2 signaling.

The network node 1360 has a similar structure as the network node 660 described above with reference to Fig. 6. The network node (base station) 1360 differs from the network node 660 in particular by the WUS/WUI generating circuitry 1385 included in circuitry 1380 instead of the WUS detecting circuitry 685 included in the circuitry 680. The structure of the transceiver 1370 may be similar as the transceiver 670.

In particular, a network node 1360 is provided, that comprises circuitry 1380 which, in operation,
- determines, whether or not a user equipment, UE, is to receive control information different from a pre-configured wake-up signal, WUS, and from a wake-up information; and
- includes into wireless signals the WUS followed by the wake-up information in case it is determined that the UE is to receive said control information.

Moreover, the network node 1360 comprises a transceiver 1370 which, in operation, transmits the wireless signals. For example, when the network node 1360 determines that a UE should wake up (e.g. because there is data to be received by the UE or condition changed so that UE should receive some new configurations or synchronization or the like), the circuitry 1380 generates a WUS and controls the transmitter 1370 to transmit it in the resources pre-configured for monitoring WUS in the LP state. Then the circuitry 1380 generates a WUI and controls the transmitter 1370 to transmit the WUI in the resources that may be determined based on (e.g. relative to) the location of the WUS as will be described later.

At the UE side, the UE monitors pre-configured resources to find WUS (which is also preconfigured). Based on the detection result of WUS, the UE decides whether to further detect the WUI. In particular if WUS (indicating that the UE should wake up) is detected, the UE will receive the WUI in the resources determined based on the WUS content or location.

The structure of the WUS part#1 may be the same as described in the preceding embodiment, i.e. the WUS may include at least one muted resource element. However, this embodiment is not limited to such WUS structure. The WUS may be any pre-configured signal that does not necessary have any muted part. As mentioned above, when referring to "pre-configured". What is meant is configured before the UE enters the LP state, i.e. configured before the UE stops receiving or monitoring the control channels and data channels apart from the WUS (and WUI). The WUS can be defined by power levels and/or phase and can be mapped on a plurality of the WUS occasion resource elements that may, but do not have to be adjacent in time domain and/or the frequency domain. For example, the WUS can be a sequence of OFDM symbols with pre-configured signal power levels and/or shape or the like.

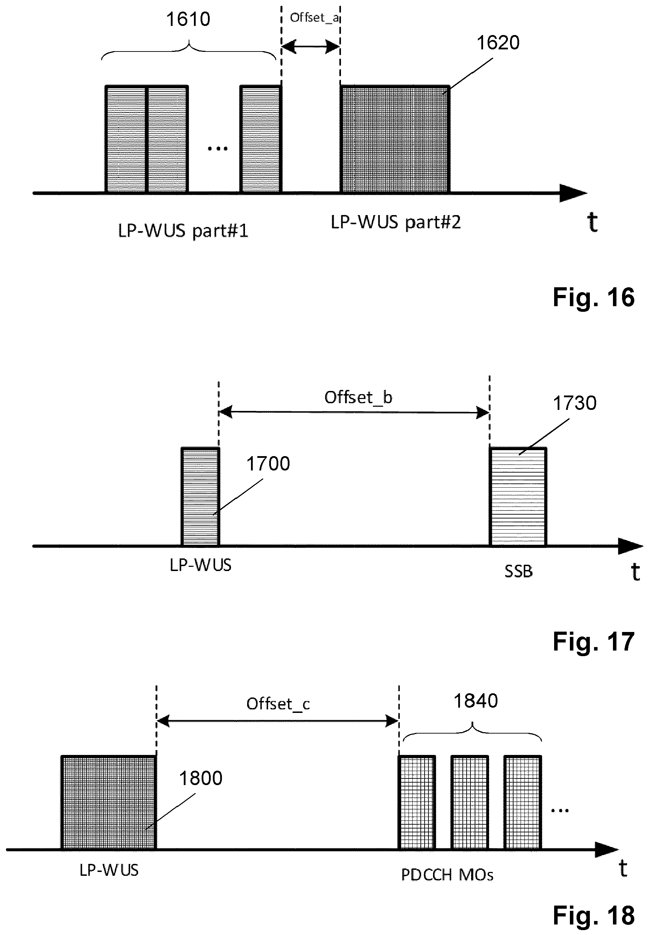

Fig. 16 shows an example in which the determining of the wake-up information (WUI) includes determining of location of resources carrying the wake-up information based on a pre-configured first offset (offset_a) in time domain relative to location of the WUS.

In particular, Fig. 16 shows OFDM symbols 1610 that may carry WUS (wake up-signaling, part 1 to be monitored in the LP state). In this example, the WUS is mapped onto a sequence of OFDM symbols. However, as mentioned above, the WUS may be mapped onto not necessarily adjacent resource element in time and/or frequency domain, in general. After the offset_a, resources carrying WUI 1620 are shown. It is noted that in this example, the offset_a is measured from the end of the WUS resources to the start of the WUI resources in time domain. However, the present disclosure is not limited to such embodiment. In general, the first offset may be defined between the start of the WUS and the start of the WUI or in any other manner. One of the advantages of defining the first offset is to reduce signaling in order to find the WUI. Such advantage is maintain irrespectively on how exactly the first offset is defined.

The time domain gap offset_a between part 1 and part 2 of the wake-up signaling may be fixed (e.g. by standard) or configurable (e.g. by higher layer signaling such as RRC or by system information, SIB). It may be configurable per cell and common for all UEs of the cell, or per group of UEs of the cell or individually for UEs.

It is noted that monitoring of WUS/WUI does not have to be performed when the UE is not in the LP state. In other words, as soon as the UE starts monitoring other control signals (SSB, PDCCH, or the like) or receive data signals, the UE may stop monitoring the WUS. This corresponds to leaving the LP state.

The transmission power level of the WUS and/or WUI may be adapted to the conditions in the communications system. In order to efficiently indicate the transmission power level, the transmission power level may be indicated as a ratio to an already indicated power level. For instance, one of the following or both may be pre-configured:
- a ratio of energy per resource element, RE, carrying WUS and energy per RE carrying reference signal usable for demodulation of the wake-up information, and
- a ratio of energy per RE carrying the wake-up information and the energy per RE carrying reference signal usable for demodulation of the wake-up information.

When referring here to "a ratio of X and Y", what is meant is either the ratio X/Y or the ratio Y/X. Energy per resource element can be abbreviated as EPRE and indicates power for one resource element (RE). This can be used for any channel (e.g., synchronization signal, reference signal, PDSCH etc). This value does not vary with system bandwidth or number of RBs. However, the present disclosure is not limited to indicate the transmission power level in this way. It is possible to use other measures and the corresponding ratios. Accordingly, providing a ratio relative to the WUS may improve reception robustness for the Will references and/or data, and possibly for further signals.

Typically, SSB would be used for reference energy level (e.g. in the NR the primary and/or the secondary synchronization signal). However, in the LP mode, a UE may not be required to receive synchronization signals

The pre-configuring may be performed by the Radio Resource Control, RRC, protocol (network node sending a configuration message to the UE) or obtained from system information. However, in general, the ratio of WUS part 1 EPRE and WUS part 2 DMRS EPRE may also be fixed. Variations are possible, for instance, there may be several possible ratios fixed in the standard and the configurability may be limited to signaling which of them shall be applicable. It is conceivable to signal the power ratio within the WUS in addition or alternatively to pre-configuring it before the UE enters the LP state. Accordingly, a UE may measure the power in the WUS (part 1 WUS signaling) and then apply the pre-configured ratio to obtain the DMRS EPRE of WUI.

The ratio of WUI EPRE (for non-DMRS resource elements) to WUI DMRS EPRE is either fixed (e.g. one or multiple values defined by standard) and/or configurable (e.g. by SIB or RRC). Accordingly, the UE may measure WUI DMRS and apply the ratio for reception of the data. It is noted that these are only some examples that are not to limit the present disclosure. In general, other ratios may be fixed and/or pre-configured. For example, a ratio of WUS (part 1 wake-up signaling) and WUI information (data transmitted within the WUI rather than the reference signals such as DMRS) may be used. Reference signals other than the DMRS may be used in the ratio instead of the DMRS mentioned in the examples above.

Provision of two-part signal may facilitate some additional power efficiency gain. For example, the detecting of presence of the WUS (part 1 of the wake-up signaling) does not include demodulation and forward error correction, FEC, decoding of signal in respective resource elements. In addition or alternatively, the determining of the wake-up information (part 2 of the wake-up signaling) includes demodulation and/or FEC decoding.

In other words, in this example, the WUS is a physical signal that can be detected by a mere measurement of the reception power without necessity of any more complex baseband physical layer processing (and without any higher layers) such as MAC, RLC, etc. Such WUS provides the advantage that the processing at the UE may be greatly simplified, leading to power savings. Correspondingly, the network node may generate and embed such signal easily into the system resources pre-configured for carrying the WUS when a UE or a plurality of UEs are to be waken up. In order to use the transmission power efficiently, the WUS may be repeatedly sent with a sequence of beams with mutually different directionalities.

On the other hand, the Will carries information (control data). In order to convey the control data reliably and resource-efficiently, it may be desirable to apply some physical layer processing such as modulation or FEC or beamforming or the like. Thus, in the present example, the WUI is a modulated and possibly also encoded signal. Beamforming, precoding or space-time coding may be applied to the WUI. It is noted that when referring herein to modulation and demodulation, what is meant is modulation of the data mapped onto one resource element (subcarrier, symbol). For example, the WUI may be modulated by BPSK, QPSK or in general a QAM of any order or by another type of modulation. Before modulation, the information to be transmitted in WUI may be FEC encoded or repeated or the like. Since WUI is only transmitted in case the WUS indicates that the UE or a plurality of UEs is to leave the LP state, the increase in power consumption caused by the physical layer processing is limited. Providing information within WUI can speed up the waking-up and enable the UE to rapidly gain synchronization and establish connection for data transfer, if necessary. For example, if a UE detects the WUS and the following WUI, based on the WUI payload (information carried by the WUI), the UE is capable of determining whether and where to receive other signals (e.g. SSB and/or PDCCH).

Figs. 14 and 15 illustrate functional structure of the respective circuitry 1330 of the UE and the circuitry 1380 of the network node. In particular, the circuitry 1330 of the UE includes a WUS detecting circuitry 1335a and WUI detecting circuitry 1335b which both may be considered as part of the WUS/WUI detecting circuitry 1335 shown in Fig. 13. The WUS detecting circuitry 1335a implements a simple power level detection as described above, whereas the WUI detection circuitry 1335b may implement at least a part of physical layer processing that is used for control/user data processing performed by Control/data processing circuitry 1337. The control/data processing circuitry 1337 is also a part of the circuitry 1330. It is noted that this functional structure is only exemplary. It is conceivable that WUI detection involves similar processing as the processing applied to user/control data, so that the control/data processing circuitry 1337 may be also used for processing (detecting) the WUI.

Correspondingly, the circuitry 1380 of the network node includes a WUS generating circuitry 1385a and WUI generating circuitry 1385b which both may be considered as part of the WUS/WUI generating circuitry 1385 shown in Fig. 13. The WUS generating circuitry 1385a implements generating of power levels mapped into the pre-configured resource elements as described above, whereas the WUI generation circuitry 1385b may implement at least a part of physical layer processing that is used for control/user data processing performed by Control/data processing circuitry 1387. The control/data processing circuitry 1387 is also a part of the circuitry 1380. It is noted that this functional structure is only exemplary. It is conceivable that Will generation involves similar processing as the processing applied to user/control data generation, so that the control/data processing circuitry 1387 may be also used for processing (generating) the WUI.

Adding a second part (WUI) to the WUS may increase the control information capacity, compared with provision of WUS only as described in the preceding embodiment. More than that, the benefit of UE power saving and friendliness to dedicated low power receiver is kept. For example, the detection of the WUS requires only a low amount of processing and consequently only a low amount of battery power. During the WUS monitoring the control/data processing circuitry 1337 may be inactive or even switched off. Similarly, the WUI detecting circuitry 1335b may be inactive or at least switched off until the WUS presence is confirmed (detected). As soon as the WUS is detected, the control/data processing circuitry 1337 and the WUI detecting circuitry 1335b may be switched on or activated again.

Fig. 17 illustrates an exemplary implementation that can be used with any of the above described examples of the present embodiment (two part wake-up signaling) or the preceding embodiment (WUS including muted resource element(s))

Accordingly, the wake-up information includes indication of a second offset (offset_b) in time domain. The second offset indicates one of:
- an offset between the wake-up information and resources including the control information, or
- a minimum offset at which the user equipment is to start monitoring of resources including the control information.

In other words, offset_b can be defined as an actual offset or a minimum offset. The actual offset may be beneficial for power saving due to less searching efforts. The minimum offset may be beneficial for requirement design and realization flexibility.

Fig. 17 shows an exemplary WUS 1700 and a synchronization signal (SSB 1730) following the WUS 1700 in the time domain and representing the control information. In Fig. 17, the offset is between the end of the WUS 1700 and the beginning of the SSB 1730. As mentioned above for offset_a, offset_b does not have to be measured in this way. Rather, it may be defined between starts or between ends of the WUS and the SSB or in any other way. The offset_b may be defined between Will and. However, in general, the offset_b may be defined between WUS (or WUI) and the control information. The control information, for instance, a synchronization signal (such as a synchronization signal block, SSB), or a physical downlink control channel, PDCCH, or the like.

Fig. 17 is only schematic. WUI is not shown in the figure.

Regarding the UE operation, the circuitry 1330, in operation, determines to receive control information other than WUS and to receive wake-up information according to a second offset. As mentioned above, the second offset indicates an offset between the wake-up information and resources including the control information or a minimum offset at which the user equipment is to start monitoring of resources including the control information. The second offset is fixed, pre-configured or received within the wake-up information or a combination of them.

After a UE decides to continue receiving other DL signals based on the received WUS, the UE may start to receive SSB, where it leaves at least a time offset (offset_b) after the WUS. However, the UE is capable of deciding otherwise: for instance, the UE may not be able to start receiving the SSB and may need more time to boot the electronics or the like. In other words, some UEs may be capable to wake up after receiving WUS and after waiting for the duration of offset_b.

The offset_b can be fixed or configurable (e.g. by way of SIB or RRC). As was also described for offset_a, offset_b can be configured per cell, per UE group or per individual UEs.

Said receiving of the control information corresponds to leaving the low-power operation state. However, it may be considered that the UE leaves the LP state already with the reception of the WUI.

With a minimum time offset (offset_b) after being waked up by the WUS and before receiving the SSB, the UE can have sufficient time to switch on modules other than the possibly dedicated module for reception of the WUS. This may correspond to the necessary ramping up time for an efficient low power receiver design compliant with UE capabilities.

The wake-up information (WUI) may include one or more of:
- PDCCH search space configuration (e.g. defining resources in which the UE is to monitor (blindly detect) PDCCH for receiving control information such as DCI),
- Discontinuous reception, DRX configuration (e.g. configuration of a DCI cycle and/or configuration of short/long DCI cycles),
- Bandwidth Part, BWP, configuration (e.g. for reception and/or transmission of control or payload data),
- Beam index configuration (e.g. for receiving or transmitting control information or user data (payload)),
- Channel State Information Reference Signal, CSI-RS, configuration (e.g. the location of the CSI-RS in the resources and/or transmission power levels of the CSI-RS; other types of reference signals may be configured by the control information alternatively or in addition to CSI-RS),
- MIMO layer number for transmitting or receiving data (control and/or payload),
- a ratio of energy per resource element, RE, carrying WUS and energy per RE carrying reference signal usable for demodulation of PDCCH, and
- a ratio of energy per RE carrying synchronization signal and energy per RE carrying reference signal usable for demodulation of PDCCH.

The above mentioned control information may help the UE to speedily start transmitting or receiving. It is noted that the present disclosure is not limited to the above mentioned parameter. Some of the above mentioned parameters may be, apart from the Will in case of waking up from the LP, be signaled by way of DCI (within PDCCH) or configured via RRC.

It may not be necessary to indicate all this data within the WUI. Some of the configurations and further control information may be received via PDCCH. The UE may start reading PDCCH after an offset_c after reception of the WUS or after reception of the WUI. This is illustrated in Fig. 18. In Fig. 18, wake-up signaling 1800 is shown. For example, the wake-up signaling 1800 is WUS (part 1), which is applicable to the preceding embodiment (WUS with muted REs) but may be also applied to the present embodiment. Alternatively, the wake-up signaling 1800 is WUI (part 2), which is applicable to the present embodiment. As shown in Fig. 18, after receiving the wake-up signaling 1800, the UE starts receiving (monitoring) PDCCH monitoring occasions 1840. The PDCCH monitoring occasions (e.g. the search space configuration) may be pre-configured (configured before the UE enters the LP state) or may be configured by the WUI.

Offset_c may be same as or different from offset_b in value. Moreover, instead of signaling both offset_b and offset_c, it is conceivable to only signal a single offset offset_bc after which the UE starts receiving both, synchronization and PDCCH. In such case, offset_bc may be defined as minimum offset after which the UE starts to receive the synchronization signal (e.g. SSB) and the PDCCH.

Similarly to offset_b, offset_c can be defined as an actual offset or a minimum offset. For example, after UE decides to continue receiving other downlink signals (other than WUS and WUI), UE starts to receive the PDCCH, where it has at least a time offset offset_c)after the WUS (or WUI). The offset_c can be fixed or configurable. The corresponding offset_c configuration may be provided by system information (e.g. a SIB) or by higher layer signaling (e.g. RRC) or within WUI or WUS. Signaling the actual offset may be beneficial for power saving due to less searching efforts - the UE would not need to monitor many PDCCH occasions. A minimum offset is beneficial for requirement design and realization flexibility for UE implementations. In general, with a time offset after being waked up by LP-WUS and before receiving PDCCH, a UE can have sufficient time to switch on other modules other than a possibly dedicated module for LP-WUS. This time may be needed for some UEs to ramp up for an appropriate low power receiver design.

Some systems, such as LTE-A and NR, provide a possibility for a UE to operate on a plurality of component carriers, i.e. support multiple band operation of UE.. A component carrier here may be generally understood as a carrier for a band over which an orthogonal transformation is performed (such as FFT for OFDM or DFT for some systems or the like) for transforming symbols carrying data in subcarriers of the band to time domain at the transmitting side.

In order to further save some power, for instance, the detecting of presence of the WUS is performed on a pre-configured subset of configured system component carriers. The configured system component carrier may correspond (as in NR) to cells in a list of cells or a list of PCIs (Physical Cell IDs).

In other words, WUS is sent in only a single one component carrier or in a limited set of component carriers (meaning less than all component carriers). The single carrier or the carriers from the limited set may be in different bands. These bands may serve different cell sizes. As a result, IDLE mode UEs of different bands/carriers may be accumulated by camping to the cell(s) (carrier(s)) that transmit WUS. The cells / carriers that transmit WUS signals may be configured by system information. In other words, a UE may read a system information of a cell to determine whether the cell supports the LP operation, and in particular whether the cell transmits WUS. Then, in order to make use of the LP operation - to be able to enter LP state and monitor for the WUS, the US may select a cell (and, e.g., camp on the cell in IDLE mode) that transmits the WUS.

Transmission of WUS only in a limited set of component carriers facilitate some resource savings in comparison with the case of signaling the WUS in all cells. Thus, a larger guard band could be reserved in such cases between the WUS and the other channels/signals in the resource grid. Such larger guard band may facilitate robust detection of the WUS.

After receiving the WUS, a UE may move to a specific carrier for normal operation of IDLE/INACTIVE (or CONNECTED) state, e.g. the UE starts to receive/transmit other signals. The specific carrier for normal operation may correspond to the carrier on which the WUS was received, but does not have to. The specific carrier for normal operation may be preconfigured (configured before entering the LP state) or may be indicated in WUS or WUI. The specific carrier for normal operation may be selected after waking up by the UE based on the received control information (e.g. system information or other control information).

With WUS being transmitted only in a limited subset of component carriers, relatively less overhead is required, although a slightly more complex UE behaviour and specification impact may be expected.

The present disclosure is not limited to cases in which the WUS is sent on one or a limited amount of component carriers. In an example, the detecting of presence of the WUS is performed on all configured system component carriers.

Thus, a WUS is configured and sent for each of component carriers (bands). The component carrier of the WUS and the component carrier of normal operation can thus be the same. Accordingly, no additional optimization of the mobility has to be performed. A UE can camp in the best cell, because each cell supports LP operation and thus transmits WUS. In comparison with the above example, a relatively smaller guard band may be reserved for efficiency of WUS. Accordingly, a larger control overhead but a less complicated UE behavior and specification impact may be expected.

As mentioned above, the WUS may be implemented as a sequence of predefined (e.g. muted and unmuted) resource elements. For different cells (component carriers), the WUS may differ, i.e. the WUS sequences may be associated with a cell ID (or component carrier ID).

The present disclosure provides methods corresponding to steps (actions) that were previously described as performed by the UE and/or the network node.

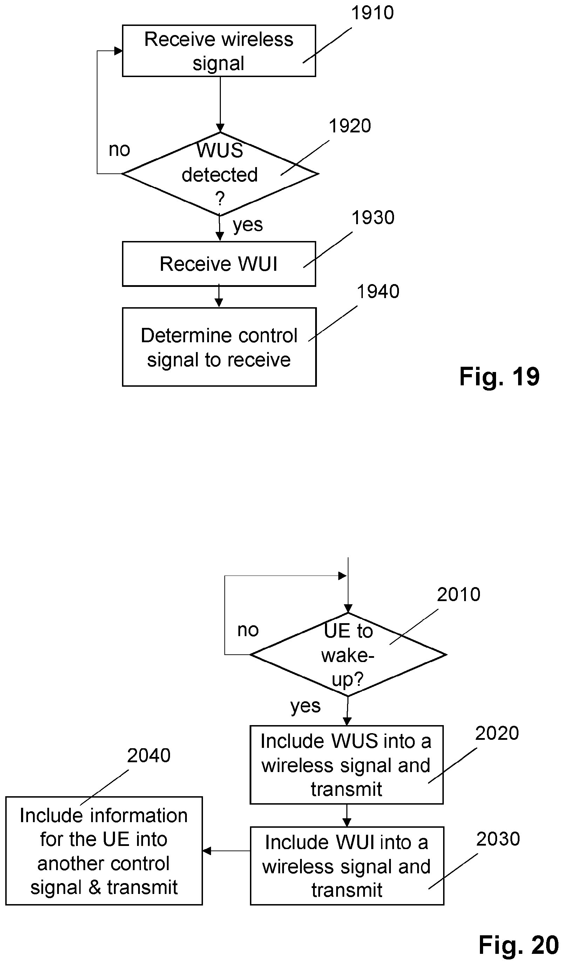

For instance, a method is provided for being performed at a user equipment, UE. The method is illustrated by a flow chart of Fig. 19 and comprises the following steps:
- receiving wireless signals in step 1910.
- detecting 1920, in the received wireless signals, presence of a wake-up signal, WUS.
- based on the WUS, determining 1930 from the received wireless signals, wake-up information, WUI. For example, in case ("Yes" in step 1920) the WUS is detected, the WUI is received. The WUI may be received in resources that the UE may determine based on the location and/or content of the WUS in some examples.
- based on the wake-up information (WUI), determining 1940 to receive control information other than WUS and wake-up information.

The method may further comprise actual reception of said control information. "No" in step 1920 means that in case the WUS is not detected in the pre-configured resources (WUS occasions), the UE remains in the LP mode and continues monitoring only the WUS as has been already described above for the present embodiment with reference to Figs. 13-18.

Fig. 20 illustrates a method for being performed at a network node. The method comprises:
- determining 2010, whether or not a user equipment, UE, is to receive control information different from a pre-configured wake-up signal, WUS, and different from a wake-up information (WUI). This corresponds to waking up of the UE from the LP state.
- including 2020 into wireless signals the WUS followed by including 2030 the wake-up information in case ("Yes" in step 2010) it is determined that the UE is to receive said control information, and
- transmitting the wireless signals (in step 2020 transmitting the WUS and in step 2030 transmitting the WUI)
- including 2040 into the wireless signals to be transmitted to the UE the control information an transmitting the wireless signal.

"No" in Step 2010 indicates that the base station (network node) returns to the determination step 2010, i.e. regularly checks whether the UE (or a plurality of UEs) is to be waken up. A UE may be to be waken up, e.g., in case there are some data to be exchanged (transmitted to or received from) the UE or the like. Particular reasons may differ based on implementation of the network node function such as scheduling and resource management functions or the like.

### Two part wake-up signal with part 1 including one or more muted resources

Above, two embodiments, each with a number of examples have been described: a WUS that includes one or more muted resource elements and a two-part wake-up signaling including WUS and WUI.

Both embodiments and their respective exemplary implementations described above may be combined. Several examples of such combinations are provided below. However, the present disclosure is not limited to those combinations.

In an example, the WUS that includes at least one muted resource element or symbol may carry additional information. In one exemplary implementation, the determining that the user equipment is to receive control signals different from WUS includes receiving, via said transceiver 620, in resources determined based on a position of the WUS, control information (which is the wake-up information, WUI described above) indicating whether and/or in which resources one or more of synchronization signal, system information, and PDCCH are to be received.

In other words, a WUS with at least one blank resource element (e.g. WUS that includes a sequence of muted and unmuted elements) is followed by a WUI that indicates (to a UE or a plurality of UEs) in which resources (or started from which time point) the UE shall receive SSB or SIB or PDCCH. It is noted that WUS and WUI may both be common for UEs in the same cell or may both be common for a UEs out of a predetermined UE group or may be both UE specific. However, the present disclosure is not limited by such examples. For instance, the WUS may be UE common (cell or group), whereas the WUI may be UE specific (e.g. carry a UE ID or the like).

The resources carrying the WUI may be located within a pre-configured time-domain offset relative to the position of the WUS as exemplified above. In general, the WUI may be designed according to any of the examples discussed in the two-part wake-up signaling embodiment.

The WUS may thus include one or more of muted resource elements and be followed by the WUI. For example, the WUS includes a predefined sequence of one or more muted resource elements and one or more unmuted resource elements, and at least one of the following applies:
- the WUS includes the predefined sequence of muted and unmuted resource elements in time domain of a time-frequency resource grid;
- the WUS includes the predefined sequence of muted symbols and unmuted symbols in time domain, and each of said symbols corresponds to a plurality of resource elements associated with the same time and a plurality of subcarriers in a time-frequency resource grid of an orthogonal frequency division system;
- the WUS includes the predefined sequence of muted and unmuted resource elements in frequency domain of a time-frequency resource grid.

WUS as well as WUI may carry some additional control information as mentioned above. In particular, the control information that may be helpful to the UE to speedily start transmission / reception of data may be distributed to WUS and WUI, so that a part of the information is carried by the WUS and another part is carried by the WUI.

### Some variations of the embodiments

It is noted that although some examples herein show that in the LP state, synchronization signals are not received, embodiments are conceivable, in which synchronization signals, but not PDCCH are monitored.

The above described embodiments are not limited to, but readily applicable to NR. For example, the SCS (Sub-carrier Spacing) used in any of the above solutions can be 3.75kHz, 7.5kHz or 15kHz, although any number compared with the other time/frequency resource can be used without restriction.

In order to increase robustness of detection of the WUS, repetition of the same signal/sequence can be used for any of the above described solutions. For example, a WUS may include one or more repetitions of a pre-configures sequence. The sequence may carry some additional information such as beam index, cell index, UE index, UE group index, frequencies or the like. Alternatively or in addition, the information carried by the WUI may be repeated in the WUI.

The WUS sequence may be one of a plurality of orthogonal or quasi-orthogonal sequences such as Zadoff-Chu (ZC) sequence, golden sequence, hadamard code, or walsh code. It is advantageous if the sequence has maximum autocorrelation at shift 0 and possibly low (e.g. 0) correlation at any other shifts.

The sequence of muted resources and/or unmuted resources forming the WUS may be preconfigured via SIB/RRC, or calculated by a UE based on a cell ID, based on a beam index or based on a frequency resource index (e.g. BWP index), or for UE to blindly detect. For example, when a UE knows the cell ID, it may determine the sequence which is to be searched for in the pre-configured resource elements. Similarly, once the UE knows the current beam index and/or the BWP index in case there is an association of them with a sequence, the UE may determine the sequence and check whether it is present in the pre-configured resources.

In case there is no unambiguous or no association of the sequence with a parameter known to a UE, the UE may try sequences out of a pre-configured set of sequences blindly, i.e. check whether they are present in the pre-configured WUS resources. When one of such sequenced is present, it is interpreted as WUS and the UE may decide to wake up. In other words, a WUS transmitted to a UE may be any one out of a pool (set) of sequences.

By measuring the signal through the sequence (unmuted parts), a UE may be able to acquire measurement for mobility and/or radio link monitoring, e.g. Reference Signal Received Power (RSRP) and/or Reference Signal Received Quality (RSRQ). In other words, the WUS may be used as a reference signal for some measurement purposes.

By measuring the received power through the blank/muted resources, a UE may acquire the interference measurement, e.g. interference level for CSI, and/or RSSI for mobility.

In the solutions, where UE detects the WUS to determine the next step behavior, the behavior may include transmitting of other uplink signal, in addition or alternatively to receiving downlink signals (e.g. SSB and PDCCH). Such uplink signals may be sounding reference signal, PUCCH, PUSCH, PRACH, or the like.

### Supplementary Synchronization Signaling.

The shortcomings of the existing power reduction mechanisms described in section "Power saving" may be addressed as described in the above embodiment "Wake-up signal using muted resource elements" and/or with the above embodiment concerning a two-part wake-up signaling. Furthermore, a method for supporting wake-up signaling and power saving using supplementary synchronization signals will be described in the following in more detail. Some combinations with the first and/or second embodiment may also be advantageous.

NR has introduced the so-called synchronization signal block, SS block (SSB), which comprises a Primary Synchronization Signal (PSS), a Secondary Synchronization Signal (SSS), and a Physical Broadcast CHannel (PBCH) (in fact PBCH DMRS and PBCH data). The PSS and SSS can be used by UEs to find, synchronize to and identify a network. The PBCH carries a minimum amount of system information including an indication where the remaining broadcast system information is transmitted.

In LTE, these three signals were also used, the PSS, SSS, and PBCH, although not being called SSB. The three SSB components are always transmitted together in NR, e.g. they have the same periodicity. A given SSB may be repeated within an SS burst set, which can be potentially used for a gNB beam-sweeping transmission. The SS burst set may be confined to a particular time period, such as a 5ms window (half-frame). For initial cell selection, the UE may assume a default SS burst set periodicity of 20 ms.

The 5G NR PSS is a Physical Layer specific signal to identify the radio frame boundary and is type of an m-sequence. The 5G NR SSS is also a Physical-Layer specific signal to identify the subframe boundary and is also an m-sequence. The PSS/SSS sequence is composed of complex values used by each element/sample of the sequence. Information on the current exemplary 5G implementation of the PSS and SSS is available from 3GPP TS 38.211 v17.4.0 sections 7.4.2.2 and 7.4.2.3, including the respective sequence generation and mapping to physical resources.

The time-frequency structure of an SS/PBCH block, carrying the SSS is described in the TS 38.211 section 7.4.3.1. In such an exemplary 5G implementation, in the time domain, an SS/PBCH block consists of 4 OFDM symbols, numbered in an increasing order from 0 to 3. The distribution of the PSS, SSS and PBCH signals within the SS/PBCH block is defined by Table 7.4.3.1-1.

In the frequency domain, an SS/PBCH block consists of 240 contiguous subcarriers, indexed with 0 to 239. The exact subcarriers to be used for each PSS, SSS and PBCH signal within the SS/PBCH block is also defined by Table 7.4.3.1-1.

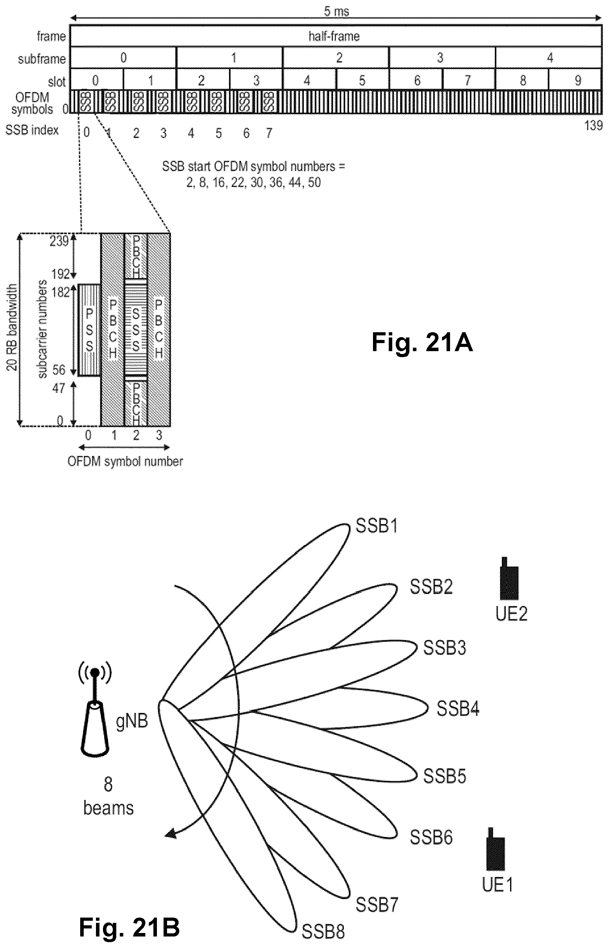

A simplified and exemplary illustration of the SSB according to the above definitions is illustrated in Fig. 21A, which shows at the bottom part the PSS, SSS, and PBCH in the time and frequency domain.

The timing (OFDM symbols) at which the SS-blocks (see Fig. 21A) are transmitted by the gNB can be defined differently. In particular, the first symbol indexes (within each half-frame with an SSB) with which a candidate SSB starts is determined according to 3GPP 38.213 v17.4.0, section 4.1 "Cell search". An example set of SSBs is illustrated in Fig. 21A, assuming start OFDM symbols of 2, 8, 16, 22, 30, 36, 44, and 50 (case of SCS=30 kHz, and frequency > 3 GHz), wherein the relevant OFDM symbol numbering starts with 0 in a half frame. The number of SSBs in a set of SSBs can also be limited to a maximum Lmax. In one example, the SSB set can comprise 4, 8 or 64 SSBs.

The candidate SS/PBCH blocks in a half frame (e.g. termed a set of SSBs) are indexed in an ascending order in time from 0 to *Lmax* - 1. Correspondingly, each SSB within a set of SSBs is assigned a unique number (starting from 0 and increasing by 1).

The SSB set illustrated in Fig. 21A shows a case where all the possible candidate SSBs are indeed transmitted by the base station. However, it is not required to transmit all SSBs. Rather, the gNB, based on some requirements, may select only some of those SSBs within a set of SSBs and transmit those. The SSBs that are actually transmitted by the SSB can be called the SSB pattern. The SSB pattern has basically the same characteristics as the corresponding set of SSBs, including the periodicity.

The gNB informs the UE about the SSB pattern, e.g. which SSBs are in fact transmitted and which are not. This can be done e.g. by the gNB transmitting an SSB bitmap, which defines the SSB pattern, wherein each bit of the SSB bitmap relates to one SSB and identifies whether said SSB is transmitted or not. The length of the SSB bitmap depends on the applicable SSB set, e.g. 4, 8, or 64 bits.

In brief, a set of candidate SSBs is configured for use by the gNB in the cell. Furthermore, among the set of candidate SSBs, the gNB can then select either all or fewer candidate SSBs to actually transmit, called an SSB pattern.

All the SSBs can be transmitted with all beams in the system. Alternatively, the SSBs can be transmitted in different beams, e.g. when SSB beamforming is enabled. In that case, each SSB is transmitted on a different spatial beam, as illustrated in Fig. 21B. Similar to the exemplary assumption of Fig. 21A, there are 8 SSBs (0-7) which can respectively be transmitted in a different beam, each beam being transmitted in a different beam direction. Therefore, a beam-sweeping form of transmission of the SSBs is achieved; put differently, the sweeping transmission of the beams (and SSBs) is time-division multiplexed and occurs at different times. The two UEs, UE1 and UE2, will receive a different SSB at different times. Each beam has a beam index, e.g. where the beam index corresponds to the SSB index that is transmitted via said beam.

The UE uses the SSBs, and particularly the SSB signals (e.g. the PSS, SSS, PBCH) in different mechanisms, such as for serving cell measurements, time / frequency synchronization etc.

In order to provide an efficient power saving mechanism, according to the present embodiment, supplementary synchronization signaling (SS) is provided which may be signaled in time resources between two SSBs. In particular the supplementary SS may be provided in time-frequency resources that are not allocated for SSBs. Physical time-frequency resources may correspond to OFDM symbols and subcarriers within the OFDM symbols. The smallest physical time-frequency resource may consist of one subcarrier in one OFDM symbol, known as a resource element. The transmissions may be scheduled in group(s) of 12 subcarriers, known as physical resource blocks (PRBs).

As discussed above, SSBs may be transmitted regularly and any occasion in the time-frequency resources which is configured for SSB transmission may be an SSB occasion. The SSB occasions may be occasions at a same frequency resource and according to a time-pattern as described above. Similarly, the term occasion is used in the following for time-frequency resources in which a specific signal or group of signals is transmitted according to a pattern. Such group of signals may also include a group of signals having a same type.

Such supplementary synchronization signaling may improve the capabilities and efficiency of LP-WURs to determine relevant information for synchronization and further information for communication such as, for instance, beam properties and wake-up signaling at appropriate timings.

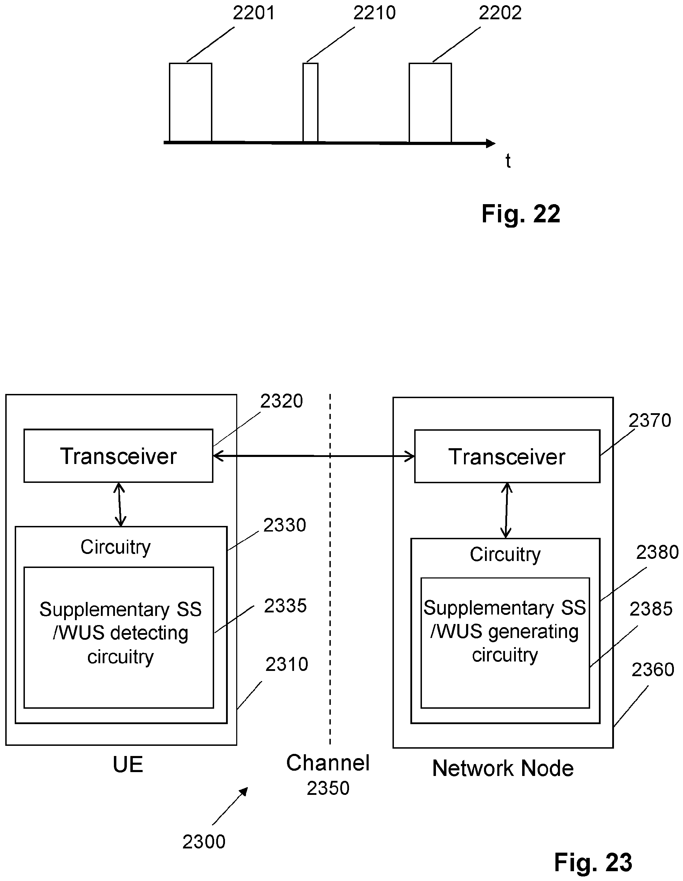

The supplementary synchronization signaling is applicable to a communication system 2300 shown in Fig. 23. The communication system 2300 may be a wireless communication system such as NR or the like, similar to the system 600 of Fig. 6 or system 1300 of fig 13. The communication system 2300 includes a UE 2310 and a network node 2360 that communicate with each other via a wireless channel 2350. UE 2310 has a similar structure as UE 610 described above with reference to Fig. 6 and UE 1310 described above with reference to Fig. 13.

A user equipment 2310 according to the present embodiment comprises a transceiver 2320 which, in operation, receives a wireless signal in time-frequency resources; and circuitry 2330 which, in operation, searches, in the wireless signal, for a supplementary synchronization signal 2210, in a resource different from occasions configured for an SSB. As described above, the SSB comprises a primary SS, a secondary SS and a physical broadcast channel, PBCH.

User equipment 2310 according to the present embodiment may further, in operation, perform time/frequency tracking/synchronization, AGC training, RRM measurement for serving cell and/or neighboring cell and/or beam tracking based on the received supplementary synchronization signal.

As also described above, occasions configured for an SSB may comprise time-frequency resources which are configured implicitly or explicitly (via signaling) for reception of an SSB.

Particularly, occasions configured for an SSB may be periodically scheduled resources. For instance, Fig. 22 shows two occasions 2201 and 2202 configured for SSBs. In Fig. 22, in each of occasions 2201 and 2202 an SSB is transmitted.

To establish or maintain synchronization, a UE may receive SSBs in occasions 2201 and 2202 shown in figure 22.

In the embodiments described above, relating to LP-WUS and two-part LP-WUS, a UE may monitor for LP-WUSs and, based on the reception of an LP-WUS start observing resources for SSBs. Alternatively, a UE may observe SSBs in a regular interval. As described above, this may include signaling monitoring operation for a Discontinued Reception, DRX, and, in particular may include connected mode DRX and idle mode DRX.

UE 2310 according to the present embodiment may observe additional resources for a supplementary synchronization signal (supplementary SS) 2210 to derive information on synchronization and/or some beam and/or cell properties.

The UE may observe the additional resources for an supplementary SS on a regular basis or before reception of an LP-WUS.

In general, more SS resource may be beneficial for LP-WUR power saving by shorter active time.

The network node 2360 shown in Fig. 23 has a similar structure as network node 660 described above with reference to Fig. 6 and as network node 1360 described above with reference to Fig. 13. The network node (base station) 2360 differs from the network node 660 and from the network node 1360 in particular by the supplementary synchronization signal generating circuitry 2385 included in circuitry 2323 instead of the WUS detecting circuitry 685 included in the circuitry 680 or the WUS/WUI generating circuitry 1385 included in circuitry 1380. The structure of the transceiver 2370 may be similar as the transceiver 670 and of the transceiver 1370.

Supplementary SS 2210 may be implemented without being accompanied by PBCH. In other words, supplementary SS may carry signals for synchronization and no resources are dedicated to PBCH within the supplementary SS and/or in adjacent symbols. However, in an exemplary embodiment, the supplementary SS may also be accompanied by PBCH as described later.

Further signaling may also accompany the supplementary SS, like, for instance, an LP-WUS, two-part WUS, or other WUS. These may be located in the same time-frequency resources or different frequency resources as discussed later.

Exemplarily shown in Fig. 22 is a single compound signal forming the supplementary SS which may be mapped to one or more adjacent symbols. However, the supplementary SS 2210 may be comprised of a plurality of signals which may each be mapped into one or a plurality of symbols as also discussed in more detail later. The plurality of signals may be mapped in consecutive symbols or may be mapped such that one or more symbols are in between one symbol carrying a signal which is part of the supplementary SS and another symbol carrying signal that is part of the supplementary SS.

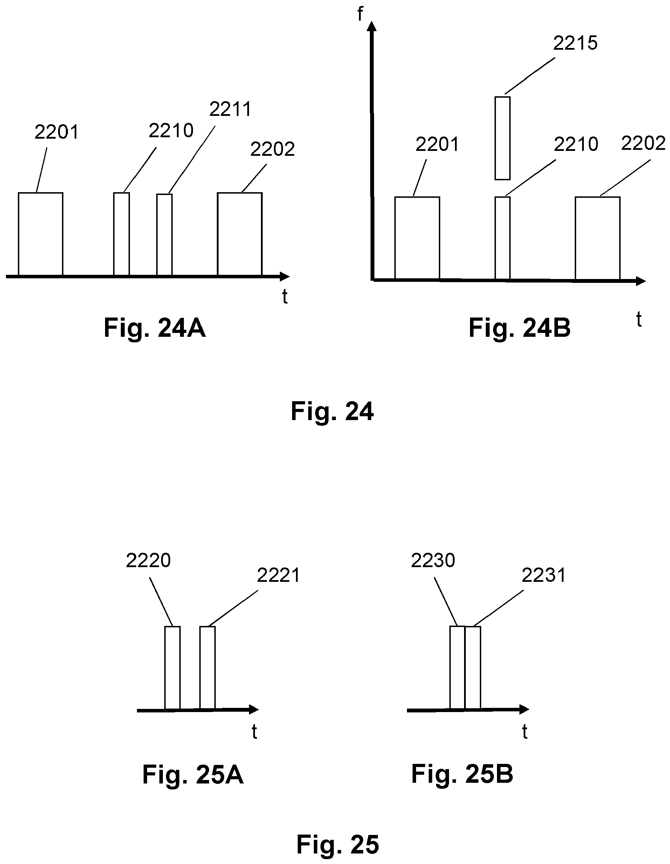

According to an aspect of the present embodiment, the supplementary SS, 2210 which may be comprised of a single signal or a plurality of signals, may be repeated in other time resources as shown in figure 24A as signal 2211.

Accordingly, circuitry 2330 according to the present aspect searches for a time domain repetition 2211 of the supplementary SS 2210 in resources different from and between two adjacent occasions 2201 and 2202 configured for SSBs.

Figure 24A exemplarity shows repetition in non-adjacent symbols. However, the supplementary SS may also be repeated in adjacent symbols. Particularly, circuitry 2330 searches for a time domain repetition of the supplementary SS in resources different from and between two adjacent occasions configured for SSBs.

Time domain repetition may be beneficial for reliability and shorter reception time of LP-WUR in order to save power. This is particularly the case when the LP-WU R may require receiving more than one synchronization signal. In this case, receiving more synchronization signaling per time may reduce the active time. Time domain repetition may also facilitate beam operation.

According to another aspect of the present embodiment, a supplementary SS 2010 may be duplicated and transmitted at the same time resources (same symbol) but in two different frequency resource blocks as shown in Fig 24B.

Particularly, the circuitry 2330 according to the present aspect, in operation, searches for a frequency domain duplication of the supplementary SS in resources different from occasions configured for SSBs.

Figure 24 exemplarily shows transmission of two supplementary SS 2210 and 2215 at different and non-adjacent frequency resources at the same time (in the same symbol). However, the two supplementary SS may also be in adjacent frequency resources.

Duplication of the supplementary SS in frequency domain may increase reliability and shorten the reception time of LP-WUR.

Although not shown in Fig. 24, a repetition of the supplementary SS may also be mapped to different frequency resources in different symbols or time resources.

Figure 25 shows an example for a supplementary synchronization signal comprised of two different signals. In this case, the term "supplementary synchronization signal" refers to a plurality of signals that are summarized as one supplementary synchronization signal. Such plurality of signals may contribute to establishing synchronization and related tasks in a complementary way.

According to an aspect of the present embodiment, the supplementary SS comprises a supplementary primary SS including a first sequence and a supplementary secondary SS including a second sequence, wherein the second sequence differs from the first sequence.

According to the present aspect, the two signals may comprise pseudo random sequences. For instance, the supplementary primary SS and the supplementary secondary SS may differ in type of the sequence they use and may comprise a Zadoff-Chu sequence and/or a Gold sequence.

According to an example of the present aspect, the supplementary primary SS and the supplementary secondary SS may comprise similar or the same signals as the primary SS (PSS) and the secondary SS (SSS) defined in NR and as discussed above. However, alternatively different signals may be used.

For instance, both synchronization signals may be sequences of 127 BPSK symbols. The supplementary primary SS may be generated by applying 1 of 3 cyclic shifts (0, 43 and 86) to a sequence of 127BPSK symbols. The supplementary secondary SS may be generated as a product of 2 sequences.

Figure 25A shows an example of a supplementary primary SS and a supplementary secondary SS being mapped to resources that are not adjacent to each other in time. For instance, the supplementary primary SS and the supplementary secondary SS may be separated by one symbol. In other words the supplementary primary SS and the supplementary secondary SS are located in time-domain symbols with exactly one symbol between them. This corresponds to the mapping pattern of the PSS and SSS in the SSB in NR. The same or different types of signals may be used as for the PSS and SSS in NR.

However, according to an example of the present embodiment, the mapping of a supplementary SS comprised of two distinct signals may deviate from the mapping in the legacy SSB. For instance, as shown in figure 25B, the two signals may be mapped to two adjacent symbols.

Using different mapping pattern from legacy SS may avoid impacting legacy UE receivers. It may be advantageous to avoid that the supplementary SS is received by legacy UE receiver, which may cause error and unnecessary power consumption.

To achieve this, any other mapping that differs from legacy PSS+SSS mapping may be used, like, for instance, mapping to symbols with more than one other symbol in between.

According to an aspect, occasions for the supplementary SS may be configured, for instance, via SIB/RRC. The occasions may also be signaled using another dedicated signaling or may be pre-determined.

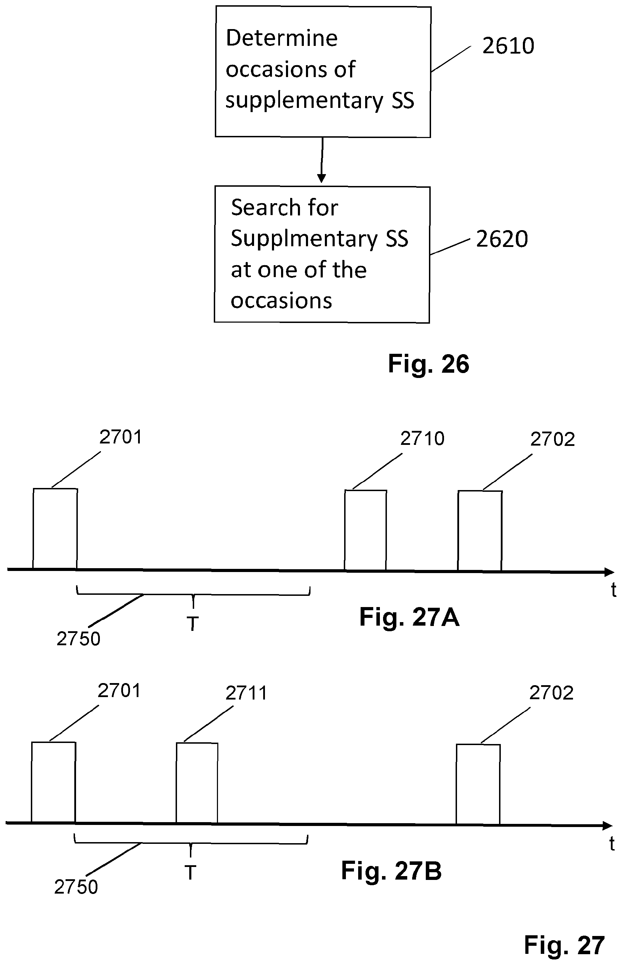

Figure 26 shows an example for determining 2610 and searching 2620, by a user equipment, for occasions of the supplementary SS. A supplementary SS may be transmitted in each of the occasions or only in some or none of the occasions.

The UE may determine whether a supplementary SS is mapped to an occasion based on a signaling, based on system parameters or the UE may determine whether a supplementary SS is mapped to an occasion based on the timing of other signals.

According to an exemplary aspect, the circuitry, in operation, searches for the supplementary SS in a resource pertaining to a supplementary SS occasion according to the configuration when a time difference between the supplementary SS occasion and a closest preceding SSB is larger than a first threshold, and skips searching for the supplementary SS in a resource pertaining to the supplementary SS occasion according to the configuration when the time difference between the supplementary SS occasion and the closest preceding SSB is not larger than the first threshold.

The closest preceding SSB may be the SSB or SSB occasion that is closest in time to the supplementary SS occasion and precedes the same. The UE may skip searching a supplementary SS in an occasion when the time difference to the closest preceding SSB or SSB occasion is smaller or equal to the first threshold.

According to a variation, depending on whether the LP-WUS or supplementary SS is configured for RRC connected or idle/inactive UEs, LP-WUS Part #1/ supplementary SS may be available/configured only for idle/inactive UEs, or a different LP-WUS Part 1/supplementary SS periodicity may be configured for RRC connected and idle/inactive UEs.

According to a further variation, if any part of LP-WUS/supplementary SS overlaps with an SSB, a part of or the whole of the LP-WUS/supplementary SS is skipped or punctured.

Figure 27 shows an occasion of an SSB 2701, an occasion for a supplementary SS 2710 and a further message 2702 which may be, for instance, a WUS or WUS-related signaling. Furthermore, the second threshold 2750 is shown as T. The second threshold is a time threshold and may be configured by the gNB and/or dependent on the periodicity of the SSBs.

In Fig. 27A, the time difference between the occasion for a supplementary SS 2710 and SSB 2701 is larger than first threshold 2750. Consequently, a supplementary SS is mapped to the supplementary SS occasion 2710. The UE determines, based on this time difference that a supplementary SS is present and searches for the supplementary SS in occasion 2710.

In Fig. 27B, the time difference between occasion for a supplementary SS 2711 and SSB 2701 is smaller than first threshold 2750. Accordingly, no supplementary SS is mapped to the supplementary SS occasion 2711. The UE determines, based on this time difference that no supplementary SS is present and searches for the supplementary SS in occasion 2711 and refrains from searching for a supplementary SS in occasion 2711.

Advantages of the present aspect may include an improved balance between system overhead, interference, network energy consumption and UE power saving gain.

To achieve more UE power saving gain, the timing gap between the supplementary SS and the further message 2702 should be sufficiently small, i.e. the supplementary SS/LP-WUS part1 and part2 are always close in time for either one to one or one to multiple mapping and transmitted. Here, in one to one mapping the SS/LP-WUS part 1 is relevant for receiving one further message, for instance, by one UE. One to multiple mapping refers to one SS/LP-WUS part 1 being relevant for reception of a plurality of messages, for instance, by a plurality of UEs or by one UE.

But too much resource configured for part#1 may lead to more system overhead, interference and network energy consumption. If the WUS and/or the supplementary SS is close enough to an SSB, the LP-WUR may reuse the SSB without requiring the gNB to transmit another supplementary SS. Otherwise, the supplementary SS is transmitted.

According to an exemplary aspect, the circuitry, in operation, searches for the supplementary SS in a resource pertaining to a supplementary SS occasion according to the configuration when a periodicity of occasions configured for the SSB is larger than a second threshold, and skips searching for the supplementary SS in the resource pertaining to the supplementary SS occasion according to the configuration when the periodicity of the occasions configured for the SSB is not larger than the second threshold.

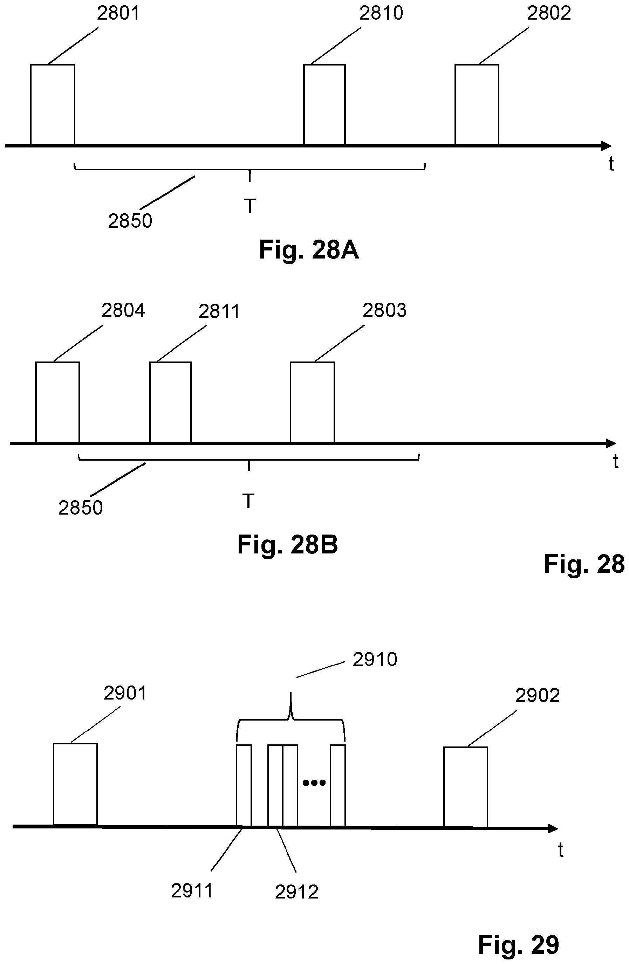

As an example for the present aspect, Figure 28A shows a first SSB occasion 2801 and a second SSB occasion 2802. Furthermore, a supplementary SS occasion 2810 is shown between the two SSB occasions 2801 and 2802. In Figure 28A, the time difference between occasions 2801 and 2802 is larger than the second threshold 2850. Consequently, a supplementary SS is mapped to the supplementary SS occasion 2810 between the two SSBs 2801 and 2802. The UE determines, based on this time difference that a supplementary SS is present and searches for the supplementary SS in occasion 2810.

Figure 28B exemplarily shows an occasion for a supplementary SS 2811 between two SSBs 2803 and 2804 that are closer to each other in time than the second threshold which is a time threshold. Consequently, no supplementary SS is mapped to the supplementary SS occasion 2810 between the two SSBs 2803 and 2804. The UE determines, based on this time difference that no supplementary SS is present and searches for the supplementary SS in occasion 2810.

In the two aspects described above, the time differences may be measured starting from the end of the SSB as exemplarily shown in figures 27 and 28. Alternatively the time difference may also be measured from the start of the SSB or from the middle time position of the SSB.

Furthermore, the difference may be measured to the start of the supplementary SS 2701 or 2711 in figure 27 or to the start of the second SSB 2802 in figure 28. Alternatively the time difference may be measured to the end or middle of the respective signals.

In the aspects described above, the UE may skip (not search for the supplementary SS in) some of the occasions and monitor (search for the sSS in) other occasions. Equally, the eNB or network node may refrain from mapping a supplementary SS to some occasions and may map supplementary SSs to other locations.

According to an aspect, the supplementary SS is part of a wake-up signal (WUS). A UE according to the present aspect may, in operation, upon receiving the WUS, determine that the user equipment is to receive a control signal other than the WUS.

Examples for a WUS comprising may be an LP-WUS as described in the first embodiment of the present application or a two part LP-WUS described in the second embodiment of the present application. Alternatively the supplementary SS may be comprised in a WUS having any other format like, for instance DCI format 2_6. Particularly, according to the present aspect, the supplementary SS may be comprised in any WUS that notifies the UE to receive a further message.

Figure 29 exemplary shows an LP-WUS that uses On/Off keying to indicate to the UE to wake up.

In the center, Fig. 29 shows as an example for the present aspect a sequence of symbols 2910 forming an LP-WUS using OOK while at the same time carrying a supplementary SS. On the left signal 2901 may be an SSB or any other signal. The signal 2902 on the right may be, for instance, another SSB or a WUI or any other signal related to the WUS.

In this example, Signal 2911 is one of the symbols used in the OOK and may carry, for instance, a supplementary primary SS. Signal 2912 is also one of the symbols used in the OOK of the LP-WUS and carry a supplementary secondary SS.

However, other WUS signals may be include supplementary synchronization signals. Examples may be LP-WUS based on FSK.

In the example shown in Fig. 29, the first and the third symbol of the OOK are used for the supplementary primary and the supplementary secondary SS. This corresponds to the mapping pattern of PSS and SSS in SSBs.

However, other symbols may be used. Particularly, the present aspect not limited to legacy SSS/PSS mapping and not limited to mapping the primary supplementary SS and the secondary supplementary SS to the first symbols of the WUS. For instance, the primary supplementary SS and the secondary supplementary SS may be mapped to two consecutive symbols.

It may be implicitly defined which symbols carry the SSs. One example may be mapping the primary supplementary SS and the secondary supplementary SS to the first two active symbols. Alternatively, the primary supplementary SS and the secondary supplementary SS may be mapped to the first two active symbols between which one symbol is switched off or the first two adjacent symbols that are switched on. Alternatively every combination in the OOK that satisfies a predetermined condition (like, for instance but not limited to, two adjacent symbols or two symbols with 1 symbol switched off in between) may be used for repetitions of the primary supplementary SS and the secondary supplementary SS. Or a configuration of this mapping may be signaled by the eNB.

Signal 2902 in Fig 29 may further be any other kind of message or may be a data for submission.

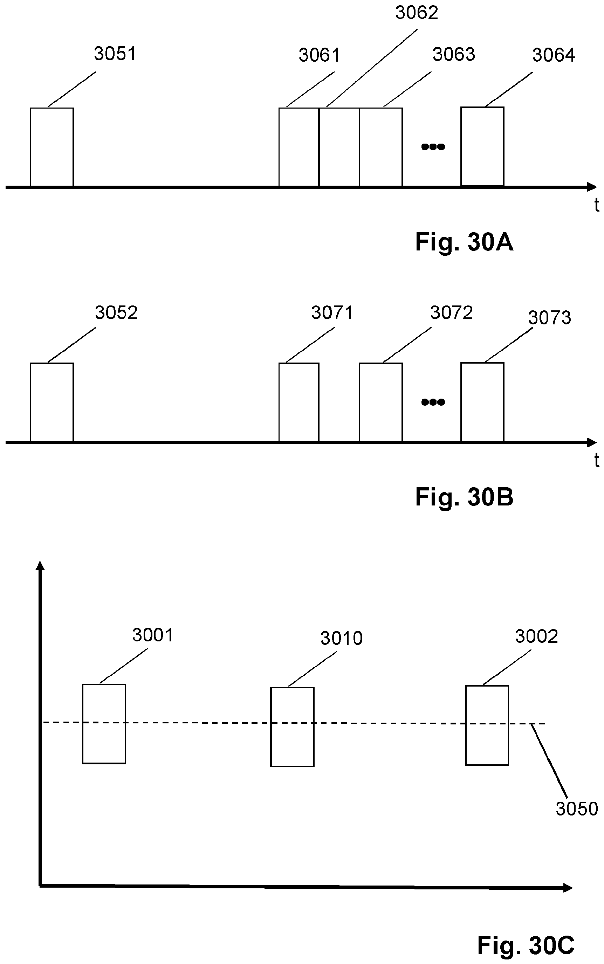

According to an aspect of the present embodiment which is exemplarily shown in Fig 30A, the control signal includes a plurality of control messages 3061 to 3064 directed to a user equipment group including the user equipment. The user equipment group may include a plurality of UEs. Alternatively, the UE group may comprise exactly one UE. The control signal may be the control signal according to the previous aspect, which describes the supplementary SS as being part of a WUS and the WUS referencing a control signal which the UE is supposed to receive. Signal 3051 in Fig. 30A may be a supplementary SS or a WUS including a supplementary SS. According to the present aspect a supplementary SS can be shared by multiple message to different UEs.

According to an aspect of the present embodiment exemplarily shown in Fig. 30B, the control signal includes a control message directed to each of a plurality of user equipment groups wherein one of the user equipment groups includes the user equipment. In Fig. 30B each of the messages 3071 to 3072 is allocated to one of the user equipment groups. Signal 3052 in Fig. 30B may be a supplementary SS or a WUS including a supplementary SS. According to the present aspect, a supplementary SS can be shared by multiple messages configured for a same UE.

A UE according to the present embodiment may determine, based on the control signal, that a message of a plurality of messages is allocated to the UE group to which the UE pertains. This UE group may also be comprise just the one UE. Furthermore, the UE may receive the message.

Merits of the last two aspects may include that system overhead and UE power saving gain may be balanced.

According to an aspect of the present embodiment, exemplarily shown in figure 30C, the supplementary SS 3010 may be located in frequency resources having the same central frequency 3050 as the frequency resources of the SSB occasions 3001 and 3002 or the SSB transmission. The central frequency may be the center of the frequency range in which a signal is transmitted. The frequency resources may be defined in bandwidth, carriers and/or sub-carriers.

A user equipment according to the present aspect accordingly searches for the supplementary SS in frequency resources having the same central frequency location as the central frequency location of the occasions configured for the SSB.

Aligning the frequency resources of the SSBs and the supplementary SSs may provide best frequency tracking performance using the supplementary SS, as the reference center frequency is provided by the location of the SSBs.

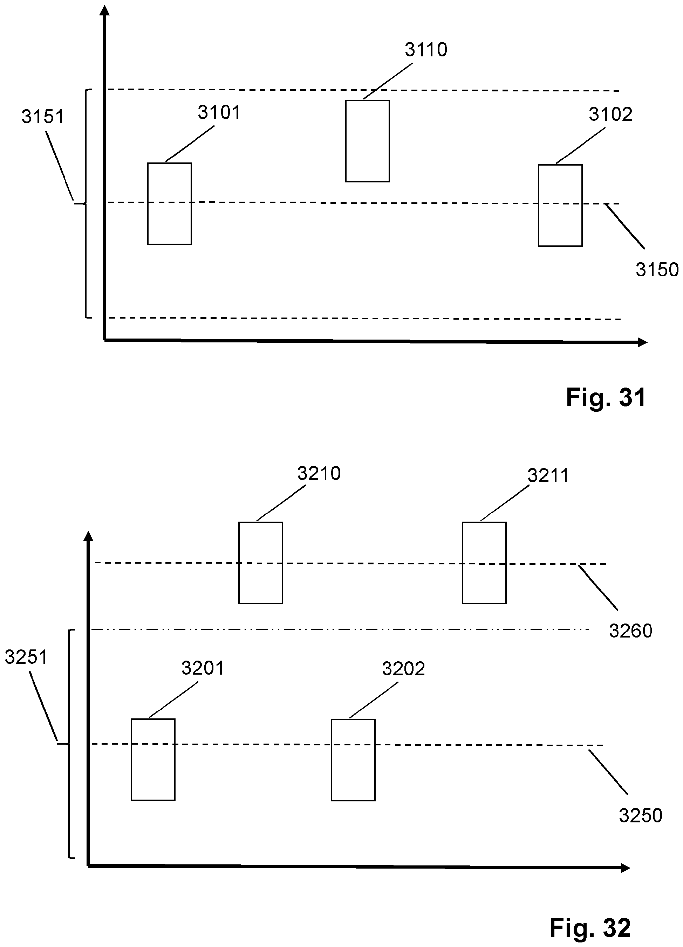

According to a further aspect, shown exemplarily in Fig. 31, the central frequencies are not necessarily identical but differ less than a third threshold 3151 wherein the third threshold is a frequency difference threshold for instance defining a maximum number of carriers or sub-carriers. The threshold may be predefined or signaled from the eNB.

A UE according to the present aspect may search for the supplementary SSs 3110 in frequency resources having a central frequency location differing from the central frequency location 3150 of the occasions configured for the SSB 3101 and 3102 by less than the third threshold.

This may facilitate UE frequency tracking by limiting the frequency gap between SSB and supplementary synchronization signal. A larger gap normally means more difficulty on frequency tracking using LP-WUS. It can relax the UE performance requirement and balance the performance and UE complexity.

According to another aspect, exemplarily shown in figure 32, the supplementary SS occasions are in different frequency resources than the SSBs and whether the supplementary SSs are to be included/are present is determined by a gNB and a UE respectively based on whether the difference between the central frequency location 3260 of the supplementary SS occasions and the central frequency location 3250 of the SSB occasions is larger than a predetermined fourth threshold 3251. The fourth threshold 3251 is a frequency difference threshold for instance defining a maximum number of carriers or sub-carriers. The threshold may be predefined or signaled from the eNB.

A user equipment according to the present aspect, in operation searches for the supplementary SS in frequency resources having a central frequency location differing from the central frequency location of the occasions configured for the SSB, and when the difference between the central frequency location 3260 of the supplementary SS occasions 3210, 3211 and the central frequency location 3250 of the SSB occasions 3201, 3202 is larger than the predetermined fourth threshold 3251, determines that the supplementary SS is to be present in each configured supplementary SS occasion.

If the frequency gap between a WUS and SSB is too large, the frequency tracking performance may be impacted. Thus transmitting supplementary SS/part1 of LP-WUS possibly including a supplementary SS may guarantee the frequency tracking performance in this case.

According to an aspect, a supplementary SS is included in a resource pertaining to a supplementary SS occasion when a time difference between the control signals different from WUS associated with said supplementary SS occasion and a closest preceding SSB is larger than a fourth threshold, and the supplementary SS is not included in the resource pertaining to the supplementary SS occasion when the time difference between the control signals different from WUS associated with the supplementary SS occasion and the closest preceding SSB is not larger than the fourth threshold which is a time threshold.

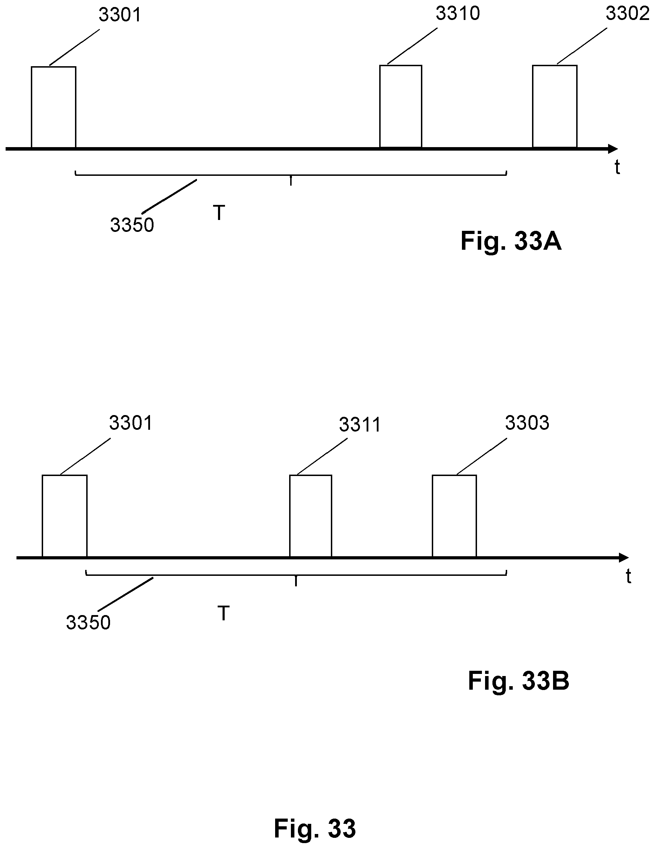

This is shown in Fig. 33. Signal 3301 is the closest preceding SSB. The fourth threshold is shown as 3350. Occasions 3310 in Fig. 33A and 3311 in FIG. 33B may be occasions for supplementary SSs or LP-WUS part 1 and signals 3302 in Fig. 33A and 3303 in Fig. 3B may be signals related to the supplementary SS or LP-WUS part 1. For instance, signals 3302 and 3303 may be LP-WUS part 2 (or WUI) or other control signals. Alternatively 3302 and 3303 may be WUSs following the supplementary SSs in occasions 3310 and 3011.

In Fig. 33A, signal 3302 is further away in time than the fourth threshold. Accordingly, a supplementary SS or other signal as described above is transmitted in occasion 3310. Accordingly, after determining that signal 3302 is further away in time than the fourth threshold, the gNB maps the respective signal to occasion 3310. And after the same determination, the UE searches for the respective signal in the occasion and receives the signal.

In Figure 33B, signal 3303 is closer to SSB 3301 than the fourth threshold and accordingly no signal is transmitted in occasion 3311 and the UE skips receiving the respective signal in occasion 3311.

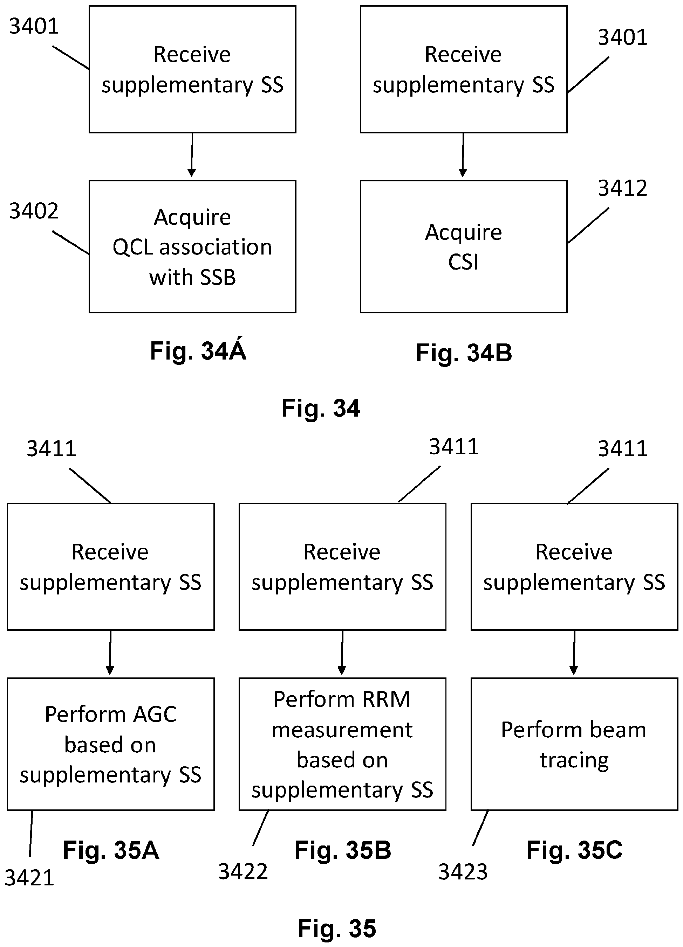

According to another aspect of the present embodiment, exemplarily shown in Fig. 34, the user equipment, in operation, receives 3401 a supplementary SS and acquires, based on the supplementary SS, a quasi-co-location, QCL, association with the SSB (c.f. 3402) and/or a channel state information-reference signal, CSI-RS (c.f. 3412).

### Transmission Configuration Indicator states and Quasi-Co-Location

As per 3GPP TS 38.214: "Physical layer procedures for data (Release 17)", v. 17.3.0, September 2022, two reference signals can have a quasi-co-located, QCL, relationship. Two antenna ports are said to be quasi co-located if properties of the channel over which a symbol on one antenna port is conveyed can be inferred from the channel over which a symbol on the other antenna port is conveyed.

In 5G NR systems, a transmission configuration indication (TCI) state is used to establish the quasi co-location (QCL) connection between a target reference signal (RS) and a source RS. The antenna ports QCL types are defined below:

| Type | Description |
|---|---|
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

TCI states are configured for PDCCH, PDSCH and channel state information reference signals (CSI-RS) in order to convey the QCL indication for the respective RS. In frequency range 1 (FR1, below 7.125 GHz) QCL Types A-C and in frequency range 2 (FR2, above 24.250 GHz) QCL types A-D are applicable. The QCL Type D for FR2 indicates that PDCCH/PDSCH/CSI-RS is transmitted with the same spatial filter as the reference signal associated with that TCI. In FR2, the network can indicate a transmit beam change for PDSCH or PDCCH by switching the TCI state.

Each TCI state can include a TCI state identifier, TCI state ID, and a RS set, or one or more individual RS(s), which are used for QCL reference. Each RS within a TCI state can be associated with a set of one or more Tx (transmit) and/or Rx (receive) beams.

Using SSBs, the beam index is determined by the PBCH DMRS and PBCH payload together. If an LP-WUR is only to receive in a limited bandwidth, e.g. 5MHz, for 30kHz SCS, the bandwidth of PBCH exceeds 5MHz, although the PSS/SSS is still within this bandwidth. Therefore, solely relying on the SSB for beam operation is not always feasible for an LP-WUR with limited bandwidth.

According to the present aspect the UE may acquire supplementary SS/LP-WUS QCL association with SSB and/or CSI-RS based on the RRC or SIB configuration, e.g. through time domain resource allocation of supplementary SS/LP-WUS that an SSB index is mapped to an LP-WUS occasion.

Alternatively a supplementary SS or an LP-WUS may explicitly carry a beam index for instance through a sequence index used by any part of the LP-WUS, through time location of a supplementary SS or a part of or the whole LP-WUS or by including a beam index in message contents in or related to LP-WUS signals.

According to an aspect of the present embodiment, the UE, in operation, after receiving 3411 a supplementary SS, performs at least one of automatic gain control (AGC) (c.f. 3421), radio resource management (RRM) (c.f. 3422), measurement for the serving cell and /or a neighboring cell; and beam tracking (c.f. 3423) based on the supplementary SS or based on the WUS or on a further control signal determined based on the WUS.

### Beam management

Beam management is a set of Layer 1 (PHY) and Layer 2 (MAC) procedures to establish and retain an optimal beam pair for good connectivity. A beam pair e.g. consists of a transmit beam and a corresponding receive beam in one link direction.

Before a UE can communicate with the network, it must perform cell search and selection procedures and obtain initial cell synchronization and system information. The first steps in that process are acquiring frame synchronization, finding out the cell identity and decoding the MIB and SIB1.

In the case of a multi-antenna system that transmits multiple beams, detecting the beams from the gNB is also a part of the initial procedure (e.g. where the UE normally detects all the beams in the search space).

Beam management can be categorized into three main procedures:
- initial beam establishment,
- beam adjustment (also called beam tracking and refining), and
- beam failure recovery.

These procedures will be briefly explained below.

Initial beam establishment includes the procedures and functions by which a beam pair is initially established in the downlink (DL) and uplink transmission (UL) directions, for example, when a connection is established. In the current 5G NR standard, this is done via beam sweeping, where different SSBs that are associated with different transmission, Tx, beams are transmitted in different OFDM symbols.

During beam sweeping, a gNB transmits beams in all directions in a burst at regularly defined intervals. Whenever a UE is synchronizing with the network, it reads the synchronization signal block, SSB, and extracts the primary synchronization signal, PSS, the secondary synchronization signal, SSS, the physical broadcast channel, PBCH, and the demodulation reference signal, DMRS.

As discussed above, a single SSB spans four OFDM symbols in time and 240 subcarriers in frequency (20 resource blocks) (see Fig. 6). Each SSB corresponds to a specific beam, beamformed in a different direction. A group of SSBs forms one SS burst set that spans a 5ms window. The SS burst is repeated periodically with a period of 20 ms, wherein the maximum number of SS blocks in a SS burst set is dependent on the operating frequency range.

The UE can then search for the strongest DL Tx beam, e.g. by adjusting the corresponding DL reception, Rx, beam at the UE side as well, and then report the selection via a corresponding RACH occasion and preamble to the gNB. In this way, the initial beam pair is established, which may remain valid after a connection is set up until a new beam indication is received by UE.

After the initial beam pair has been established, the beam pair may be constantly adjusted, in order to account for a movement of the UE and/or a change of the environment. This may be referred to as beam adjustment. In addition, beam management can also include refining the beam shape, for example using a narrower CSI-RS beam compared to a relatively wider SSB beam used for initial beam establishment.

The UE measures the beam strength by measuring received signal power. In idle mode, it is based on the synchronization signals, and in connected mode, it can be based on the channel state information reference signal, CSI-RS, in DL and sounding reference signal, SRS, in UL. The UE searches for the best beam periodically using predefined threshold criteria defined by the gNB and identifies the beam that has highest reference signal received power, RSRP. The UE may then perform a beam reporting procedure.

As beam adjustment does not happen simultaneously at the gNB and UE, one beam per procedure - identified by their index - is the outcome that may be used for UL or DL communication. The gNB may use information and recommendations from the UE to enhance beam adjustment. Transmission of control signaling and data may benefit from the beams selected in the process, because beam adjustment aims at improving the link quality based on ever-changing radio channel conditions. The gNB is in charge of deciding which UL Rx and DL Tx beams it is going to use and of indicating the UE about them. Upon knowing the beams the gNB is using, the UE is able to select their own UL Tx and DL Rx beams.

Using a supplementary synchronization signal in addition to the SSBs may provide advanced beam tracking in additional time resources.

In communication systems according to LTE, Radio Resource Management (RRM) encompasses a wide range of techniques and procedures, including power control, scheduling, cell search, cell reselection, handover, radio link or connection monitoring, and connection establishment and re-establishment. Cell Search within E-UTRAN (LTE) is one of the most fundamental aspects of mobility and enables the UE to acquire the carrier frequency, timing and Physical Cell Identity (PCI).

Further, RRM-related actions undertaken by the UE can be broadly divided into those relevant in the RRC-IDLE state and those relevant in the RRC-CONNECTED state.

The measurement of the serving cell and any neighboring cells is usually performed in a regular manner by the UEs. This may also involve the transmission of measurement reports from the UE to its service eNB.

In NR, RRM can be based on PSS and SSS comprised in the regularly transmitted SSBs.

According to the present aspect, for instance, the supplementary primary SS and the supplementary secondary SS may be employed in RRM measurements similarly to the PSS and SSS in NR.

For each of above aspects of the present embodiment, a network node or gNB is provided which includes the respective signals in the wireless signal in line with the aspects.

The present disclosure provides methods corresponding to steps (actions) that were previously described as performed by the UE and/or the network node.

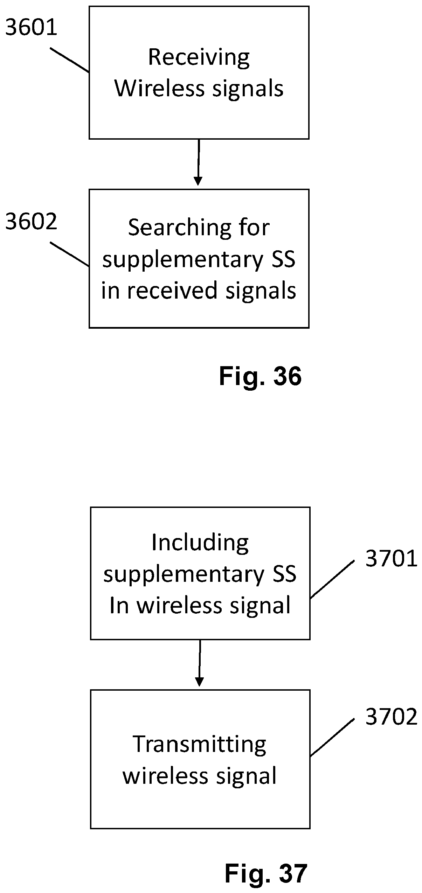

For instance, a method is provided for being performed at a user equipment, UE. The method is illustrated by a flow chart of Fig. 36 and comprises the following steps:
receiving 3601 wireless signals;
searching 3601, in the wireless signal, for a supplementary synchronization signal, SS, in a resource different from occasions configured for a synchronization signal block, SSB, wherein the SSB comprises a primary SS, a secondary SS and a physical broadcast channel, PBCH.Fig. 37 illustrates an exemplary method for being performed at a network node. The method comprises including, into a wireless signal, a supplementary synchronization signal, SS, in resources different from resources configured for a synchronization signal block, SSB wherein the SSB comprises a primary SS, a secondary SS and a physical broadcast channel, PBCH; and transmitting the wireless signal.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

Aspects of a first embodiment are summarized in the following.

According to a first aspect, a user equipment, UE, is provided. The UE includes a transceiver which, in operation, receives a wireless signal; and circuitry which, in operation, (i) detects, in the received wireless signal, whether or not a pre-configured wake-up signal, WUS, is present, wherein the WUS includes one or more of muted resource elements, and (ii) in case WUS is detected as present, determines that the user equipment is to receive control signals different from WUS.

According to a second aspect provided in addition to the first aspect, the WUS includes a predefined sequence of one or more muted resource elements and one or more unmuted resource elements.

According to a third aspect provided in addition to the second aspect, the WUS includes the predefined sequence of muted and unmuted resource elements in time domain of a time-frequency resource grid.

According to a fourth aspect provided in addition to one of the second or third aspect, the WUS includes the predefined sequence of muted symbols and unmuted symbols in time domain, and each of said symbols corresponds to a plurality of resource elements associated with the same time and a plurality of subcarriers in a time-frequency resource grid of an orthogonal frequency division system.

According to a fifth aspect, provided in addition to one of the second to fourth aspect, WUS includes the predefined sequence of muted and unmuted resource elements in frequency domain of a time-frequency resource grid.

According to a sixth aspect, provided in addition to one of the second to fifth aspect, the predefined sequence is one of a plurality of predefined sequences that correspond to WUS; and each of the plurality of predefined sequences is associated with a respective content of a control information.

According to a seventh aspect provided in addition to the sixth aspect, said control information indicates one or more of:
- a cell ID,
- a UE group ID,
- a UE ID,
- offset after which the user equipment is to monitor a signal other than the WUS, and
- that the user equipment is to start monitoring a system synchronization signal, and/or a physical downlink control channel, PDCCH.

According to an eighth aspect provided in addition to any of the first to seventh aspect, the control signals different from WUS include synchronization signal and/or system information and/or PDCCH.

According to a ninth aspect provided in addition to any one of the first to eighth aspect, the determining that the user equipment is to receive control signals different from WUS includes receiving, via said transceiver, in resources determined based on a position of the WUS, control information indicating whether and/or in which resources one or more of synchronization signal, system information, and PDCCH are to be received.

According to a tenth aspect provided in addition to the ninth aspect, resources carrying the control information are located within a pre-configured time-domain offset relative to the position of the WUS.

According to an eleventh aspect provided in addition to any one of the first to tenth aspect, the circuitry, in operation performs: (i) a measurement of interference based on the power received in said one or more muted resource elements, and/or (ii) a measurement of Reference Signal Received Power, RSRP, or Reference Signal Received Quality, RSRQ, using the one or more unmuted resource elements as reference signals.

According to a twelfth aspect provided in addition to any of the first to the eleventh aspect, said WUS differs for different wireless cells.

According to a thirteenth aspect, a network node is provided, the network node comprising: circuitry that, in operation, determines whether or not a user equipment, UE, is to receive control signals different from a pre-configured wake-up signal, WUS, and includes, into a wireless signal, the WUS in case it is determined that the UE is to receive said control signals, wherein the WUS includes one or more of muted resource elements; and a transceiver that, in operation, transmits the wireless signal.

According to a fourteenth aspect, provided is a method for being performed at a user equipment, UE, the method comprising: receiving a wireless signal, detecting, in the received wireless signal, whether or not a pre-configured wake-up signal, WUS, is present, wherein the WUS includes one or more of muted resource elements, and in case WUS is detected as present, determining that the user equipment is to receive control signals different from WUS.

According to a fifteenth aspect, provided is a method for being performed at a network node, the method comprising: determining whether or not a user equipment, UE, is to receive control signals different from a pre-configured wake-up signal, WUS; including, into a wireless signal, the WUS in case it is determined that the UE is to receive said control signals, wherein the WUS includes one or more of muted resource elements; and transmitting the wireless signal.

An integrated circuit, IC, is provided (for a user equipment, UE). The IC circuitry is configured to (i) detect, in a received wireless signal, whether or not a pre-configured wake-up signal, WUS, is present, wherein the WUS includes one or more of muted resource elements, and (ii) in case WUS is detected as present, determine that the user equipment is to receive control signals different from WUS. It is noted that the receiving of the wireless signal can correspond to receiving at the input of the IC.

Provided further is an IC (for a network node) is provided, the IC is configured to determine whether or not a user equipment, UE, is to receive control signals different from a pre-configured wake-up signal, WUS, and to include, into a wireless signal, the WUS in case it is determined that the UE is to receive said control signals, wherein the WUS includes one or more of muted resource elements.

Aspects of a second embodiment are summarized in the following.

According to a first aspect, a user equipment, UE, is provided. The UE includes a transceiver which, in operation, receives wireless signals; and circuitry which, in operation, (i) detects, in the received wireless signals, presence of a wake-up signal, WUS; (ii) based on the WUS, determines from the received wireless signals, wake-up information; and (iii) based on the wake-up information, determines to receive control information other than WUS and wake-up information.

According to a second aspect provided in addition to the first aspect, the determining of the wake-up information includes determining of location of resources carrying the wake-up information based on a pre-configured first offset in time domain relative to location of the WUS.

According to a third aspect provided in addition to the first aspect or the second aspect, at least one of the following is pre-configured: (i) a ratio of energy per resource element, RE, carrying WUS and energy per RE carrying reference signal usable for demodulation of the wake-up information, and (ii) a ratio of energy per RE carrying the wake-up information and the energy per RE carrying reference signal usable for demodulation of the wake-up information.

According to a fourth aspect provided in addition to the third aspect or the second aspect, the pre-configuring is performed by Radio Resource Control, RRC, protocol or obtained from system information.

According to a fifth aspect provided in addition to any of the first to fourth aspect, the detecting of presence of the WUS does not include demodulation and forward error correction, FEC, decoding of signal in respective resource elements, and/or the determining of the wake-up information includes demodulation FEC decoding.

According to a sixth aspect provided in addition to any of the first to fifth aspect, the wake-up information includes indication of a second offset, in time domain and the second offset indicates one of: an offset between the wake-up information and resources including the control information, or a minimum offset at which the user equipment is to start monitoring of resources including the control information.

In particular, the circuitry, in operation, determines to receive control information other than WUS and wake-up information according to a second offset; and the second offset indicates one of: (i) an offset between the wake-up information and resources including the control information, or (ii) a minimum offset at which the user equipment is to start monitoring of resources including the control information; and the second offset is pre-configured or received within the wake-up information.

According to a seventh aspect provided in addition to any of the first to sixth aspect, said control information is a system synchronization block, SSB, or a physical downlink control channel, PDCCH.

According to an eighth aspect provided in addition to any of the first to seventh aspect, said wake-up information includes one or more of:
- PDCCH search space configuration,
- Discontinuous reception, DRX configuration,
- Bandwidth Part, BWP, configuration,
- Beam index configuration,
- Channel State Information Reference Signal, CSI-RS, configuration,
- MIMO layer number for transmitting or receiving data,
- a ratio of energy per resource element, RE, carrying WUS and energy per RE carrying reference signal usable for demodulation of PDCCH, and
- a ratio of energy per RE carrying synchronization signal and energy per RE carrying reference signal usable for demodulation of PDCCH.

According to a ninth aspect provided in addition to any of the first to eighth aspect, the detecting of presence of the WUS is performed on a pre-configured subset of configured system component carriers.

According to a tenth aspect provided in addition to any of the first to eighth aspect, the detecting of presence of the WUS is performed on all configured system component carriers.

According to an eleventh aspect provided in addition to any of the first to tenth aspect, the WUS includes one or more of muted resource elements.

According to a twelfth aspect provided in addition to the twelfth aspect, the WUS includes a predefined sequence of one or more muted resource elements and one or more unmuted resource elements, and at least one of the following applies: (i) the WUS includes the predefined sequence of muted and unmuted resource elements in time domain of a time-frequency resource grid; (ii) the WUS includes the predefined sequence of muted symbols and unmuted symbols in time domain, and each of said symbols corresponds to a plurality of resource elements associated with the same time and a plurality of subcarriers in a time-frequency resource grid of an orthogonal frequency division system; (iii) the WUS includes the predefined sequence of muted and unmuted resource elements in frequency domain of a time-frequency resource grid.

According to a thirteenth aspect, provided is a network node comprising circuitry which, in operation, (i) determines whether or not a user equipment, UE, is to receive control information different from a pre-configured wake-up signal, WUS, and from a wake-up information; and (ii) includes into wireless signals the WUS followed by the wake-up information in case it is determined that the UE is to receive said control information, and a transceiver which, in operation, transmits the wireless signals.

According to a fourteenth aspect, provided is a method for being performed at a user equipment, UE, the method comprising: receiving wireless signals; detecting, in the received wireless signals, presence of a wake-up signal, WUS; based on the WUS, determining from the received wireless signals, wake-up information, and based on the wake-up information, determining to receive control information other than WUS and wake-up information.

According to a fifteenth aspect, provided method for being performed at a network node, the method comprising: determining, based on a wake-up information, whether or not a user equipment, UE, is to receive control information different from a pre-configured wake-up signal, WUS, and from a wake-up information; and including into wireless signals the WUS followed by the wake-up information in case it is determined that the UE is to receive said control information, and transmitting the wireless signals.

According to a another aspect, an integrated circuit is provided that is configured to detects, in the received wireless signals, presence of a wake-up signal, WUS; (ii) based on the WUS, determine from the received wireless signals, wake-up information; and (iii) based on the wake-up information, determine to receive control information other than WUS and wake-up information. Such IC may implement the circuitry 1330 of the UE mentioned above.

According to another aspect, an integrated circuit is provided that is configured to (i) determine whether or not a user equipment, UE, is to receive control information different from a pre-configured wake-up signal, WUS, and from a wake-up information; and (ii) include into wireless signals the WUS followed by the wake-up information in case it is determined that the UE is to receive said control information. The IC may implement the circuitry 1380 of the network node mentioned above.

Further provided are an integrated circuit configured for controlling a communication device, to carry out the method according to the fifteenth aspect, and an integrated circuit for controlling a base station to carry out the communication method according to the sixteenth aspect.

In addition, a non-transitory medium is provided storing program instructions which, when executed on a processing circuitry such as a general purpose processor, cause the processing circuitry to perform all steps of the above mentioned method embodiments or aspects.

Aspects of a third embodiment are summarized in the following.

According to a first aspect, a user equipment is provided. The user equipment comprised a transceiver which, in operation, receives a wireless signal in time-frequency resources, and circuitry which, in operation, searches, in the wireless signal, for a supplementary synchronization signal, SS, in a resource different from occasions configured for a synchronization signal block, SSB, wherein the SSB comprises a primary SS, a secondary SS and a physical broadcast channel, PBCH.

According to a second aspect provided in addition to the first aspect, the circuitry, in operation, searches for a time domain repetition of the supplementary SS in resources different from and between two adjacent occasions configured for SSBs, and/or wherein the circuitry, in operation, searches for a frequency domain duplication of the supplementary SS in resources different from occasions configured for SSBs.

According to a third aspect provided in addition to the first or second aspect, the supplementary SS comprises a supplementary primary SS including a first se quence and a supplementary secondary SS including a second sequence, wherein the second sequence differs from the first sequence.

According to a fourth aspect provided in addition to any of the first to third aspect, the circuitry, in operation, determines from the system information and/or RRC configuration a configuration of resources for supplementary SS occasions to carry the supplementary SS, and searches for the supplementary SS in resources pertaining to the supplementary SS occasions according to said configuration.

According to an alternative fourth aspect provided in addition to the third aspect the supplementary primary SS and the supplementary secondary SS are located in time-domain symbols with exactly one symbol between them.

According to a second alternative fourth aspect provided in addition to the third aspect, the supplementary primary SS and the supplementary secondary SS are located in adjacent symbols.

According to a third alternative fourth aspect provided in addition to any of the first to third aspect or in addition to the alternative fourth aspect, the first sequence included in the supplementary primary SS is the same as the as the sequence included in the primary SS comprised in the SSB, and the second sequence included in the supplementary secondary SS is the same as the as the sequence included in the secondary SS comprised in the SSB.

According to a fourth alternative fourth aspect provided in addition to any of the first to third aspect or in addition to any of the first to third alternative fourth aspects, the supplementary SS is sequence based, and the sequence used in the supplementary SS is different from the sequence used in the primary SS as well as different from the sequence used in the secondary SS comprised in the SSB.

According to a fifth aspect provided in addition to the fourth aspect the circuitry, in operation, searches for the supplementary SS in a resource pertaining to a supplementary SS occasion according to the configuration when a periodicity of occasions configured for the SSB is larger than a second threshold, and skips searching for the supplementary SS in the resource pertaining to the supplementary SS occasion according to the configuration when the periodicity of the occasions configured for the SSB is not larger than the second threshold.

According to an alternative fifth aspect provided in addition to the fourth aspect the circuitry, in operation, searches for the supplementary SS in a resource pertaining to a supplementary SS occasion according to the configuration when a time difference between the supplementary SS occasion and a closest preceding SSB is larger than a first threshold, and skips searching for the supplementary SS in a resource pertaining to the supplementary SS occasion according to the configuration when the time difference between the supplementary SS occasion and the closest preceding SSB is not larger than the first threshold.

According to a sixth aspect provided in addition to any of the first to fifth aspect or in addition to the alternative fourth aspects the supplementary SS is part of a wake-up signal, WUS, and the circuitry, in operation, upon receiving the WUS, determines that the user equipment is to receive a control signal other than the WUS.

According to a seventh aspect provided in addition to the sixth aspect the control signal includes a plurality of control messages directed to a user equipment group including the user equipment.

According to alternative seventh aspect provided in addition to the sixth aspect the circuitry, in operation, searches for the supplementary SS in a resource pertaining to a supplementary SS occasion when a time difference between the control signals different from WUS associated with said supplementary SS occasion and a closest preceding SSB is larger than a fourth threshold, and skips searching for the supplementary SS in the resource pertaining to the supplementary SS occasion when the time difference between the control signals different from WUS associated with the supplementary SS occasion and the closest preceding SSB is not larger than the fourth threshold.

According to an eighth aspect provided in addition to the sixth aspect the control signal includes a control message directed to each of a plurality of user equipment groups wherein one of the user equipment groups includes the user equipment.

According to a ninth aspect provided in addition to any of the first to eighth aspect or in addition to any of the alternative aspects the circuitry, in operation searches for the supplementary SS in frequency resources having the same central frequency location as the central frequency location of the occasions configured for the SSB.

According to a tenth aspect provided in addition to any of the first or eighth or in addition to any of the alternative aspects aspect the circuitry, in operation searches for the supplementary SS in frequency resources having a central frequency location differing from the central frequency location of the occasions configured for the SSB by less than a third threshold.

According to a eleventh aspect provided in addition to any of the first to tenth aspect or in addition to any of the alternative aspects, the circuitry, in operation, acquires, based on the supplementary SS a quasi-co-location, QCL, association with the SSB and/or a channel state information-reference signal, CSI-RS.

According to an alternative eleventh aspect provided in addition to any of the fourth to eighth aspect or in addition to the fifth or seventh alternative aspects, the circuitry, in operation, searches for the supplementary SS in frequency resources having a central frequency location differing from the central frequency location of the occasions configured for the SSB, and when the difference between the central frequency location of the supplementary SS occasions and the central frequency location of the SSB occasions is larger than a predetermined fourth threshold, determines that the supplementary SS is to be present in each configured supplementary SS occasion.

According to a twelfth aspect provided in addition to any of the first to eleventh aspect or in addition to any of the alternative aspects the circuitry, in operation, performs at least one of automatic gain control, AGC, radio resource management, RRM, measurement for the serving cell and /or a neighboring cell, and beam tracing based on the supplementary SS.

According to a thirteenth aspect a network node is provided. The network node comprises circuitry that, in operation, includes, into a wireless signal, a supplementary synchronization signal, SS, in resources different from occasions configured for a synchronization signal block, SSB, wherein the SSB comprises a primary SS, a secondary SS and a physical broadcast channel, PBCH, and a transceiver that, in operation, transmits the wireless signal.

According to a fourteenth aspect, provided is a method for being performed at a user equipment, UE, the method comprising receiving wireless signals and searching, in the wireless signal, for a supplementary synchronization signal, SS, in a resource different from occasions configured for a synchronization signal block, SSB, wherein the SSB comprises a primary SS, a secondary SS and a physical broadcast channel, PBCH.

According to a fifteenth aspect, provided is a method for being performed at a network node, the method comprising including, into a wireless signal, a supplementary synchronization signal, SS, in resources different from resources configured for a synchronization signal block, SSB wherein the SSB comprises a primary SS, a secondary SS and a physical broadcast channel, PBCH, and transmitting the wireless signal.

According to a another aspect, an integrated circuit is provided that is configured to search, in the wireless signal, for a supplementary synchronization signal, SS, in a resource different from occasions configured for a synchronization signal block, SSB, wherein the SSB comprises a primary SS, a secondary SS and a physical broadcast channel, PBCH. Such IC may implement the circuitry 2330 of the UE mentioned above.

According to another aspect, an integrated circuit is provided that is configured to include, into a wireless signal, a supplementary synchronization signal, SS, in resources different from occasions configured for a synchronization signal block, SSB, wherein the SSB comprises a primary SS, a secondary SS and a physical broadcast channel, PBCH. The IC may implement the circuitry 2380 of the network node mentioned above.

Further provided are an integrated circuit configured for controlling a communication device, to carry out the method according to the fourteenth aspect, and an integrated circuit for controlling a base station to carry out the communication method according to the fifteenth aspect.

In addition, a non-transitory medium is provided storing program instructions which, when executed on a processing circuitry such as a general purpose processor, cause the processing circuitry to perform all steps of the above mentioned method embodiments or aspects.

## Claims

1. A user equipment, comprising:
a transceiver which, in operation, receives a wireless signal in time-frequency resources; and
circuitry which, in operation,
searches, in the wireless signal, for a supplementary synchronization signal, SS, in a resource different from occasions configured for a synchronization signal block, SSB,
wherein the SSB comprises a primary SS, a secondary SS and a physical broadcast channel, PBCH.

2. The user equipment according to claim 1, wherein
the circuitry, in operation, searches for a time domain repetition of the supplementary SS in resources different from and between two adjacent occasions configured for SSBs, and/or
wherein the circuitry, in operation, searches for a frequency domain duplication of the supplementary SS in resources different from occasions configured for SSBs.

3. The user equipment according to any of claims 1 or 2, wherein the supplementary SS comprises a supplementary primary SS including a first sequence and a supplementary secondary SS including a second sequence, wherein the second sequence differs from the first sequence.

4. The user equipment according to any of claims 1 to 3, wherein
the circuitry, in operation,
determines from the system information and/or RRC configuration a configuration of resources for supplementary SS occasions to carry the supplementary SS, and searches for the supplementary SS in resources pertaining to the supplementary SS occasions according to said configuration.

5. The user equipment according to claim 4, wherein
the circuitry, in operation,
searches for the supplementary SS in a resource pertaining to a supplementary SS occasion according to the configuration when a periodicity of occasions configured for the SSB is larger than a second threshold, and
skips searching for the supplementary SS in the resource pertaining to the supplementary SS occasion according to the configuration when the periodicity of the occasions configured for the SSB is not larger than the second threshold.

6. The user equipment according to any of claims 1 to 5, wherein
the supplementary SS is part of a wake-up signal, WUS, and
the circuitry, in operation,
upon receiving the WUS, determines that the user equipment is to receive a control signal other than the WUS.

7. The user equipment according to claim 6, wherein
the control signal includes a plurality of control messages directed to a user equipment group including the user equipment.

8. The user equipment according to claim 6, wherein
the control signal includes a control message directed to each of a plurality of user equipment groups wherein one of the user equipment groups includes the user equipment.

9. The user equipment according to any of claims 1 to 8, wherein
the circuitry, in operation
searches for the supplementary SS in frequency resources having the same central frequency location as the central frequency location of the occasions configured for the SSB.

10. The user equipment according to any of claims 1 to 8, wherein
the circuitry, in operation
searches for the supplementary SS in frequency resources having a central frequency location differing from the central frequency location of the occasions configured for the SSB by less than a third threshold.

11. The user equipment according to any of claims 1 to 10, wherein the circuitry, in operation, acquires, based on the supplementary SS:
- a quasi-co-location, QCL, association with the SSB and/or
- a channel state information-reference signal, CSI-RS.

12. The user equipment according to any of claims 1 to 11, wherein
the circuitry, in operation, performs at least one of
automatic gain control, AGC;
radio resource management, RRM, measurement for the serving cell and /or a neighboring cell; and
beam tracing
based on the supplementary SS.

13. A network node comprising:
circuitry that, in operation, includes, into a wireless signal, a supplementary synchronization signal, SS, in resources different from occasions configured for a synchronization signal block, SSB, wherein the SSB comprises a primary SS, a secondary SS and a physical broadcast channel, PBCH; and
a transceiver that, in operation, transmits the wireless signal.

14. A method for being performed at a user equipment, UE, the method comprising:
receiving wireless signals; and
searching, in the wireless signal, for a supplementary synchronization signal, SS, in a resource different from occasions configured for a synchronization signal block, SSB,
wherein the SSB comprises a primary SS, a secondary SS and a physical broadcast channel, PBCH.

15. A method for being performed at a network node, the method comprising:
including, into a wireless signal, a supplementary synchronization signal, SS, in resources different from resources configured for a synchronization signal block, SSB wherein the SSB comprises a primary SS, a secondary SS and a physical broadcast channel, PBCH; and
transmitting the wireless signal.
